(19) **Europäisches Patentamt European Patent Office Office européen des brevets**

(11) **EP 4 564 864 A1**

(12) **EUROPEAN PATENT APPLICATION**
published in accordance with Art. 153(4) EPC

(43) Date of publication:
04.06.2025 Bulletin 2025/23

(21) Application number: 23858877.6

(22) Date of filing: 28.06.2023

(51) International Patent Classification (IPC):
*H04W 4/70* (2018.01)  *H04W 24/02* (2009.01)

(52) Cooperative Patent Classification (CPC):
**H04W 4/70; H04W 68/00;** Y02D 30/70

(86) International application number:
**PCT/CN2023/103463**

(87) International publication number:
**WO 2024/045839 (07.03.2024 Gazette 2024/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 29.08.2022 CN 202211042819

(71) Applicant: Huawei Technologies Co., Ltd.
Shenzhen, Guangdong 518129 (CN)

(72) Inventors:
• WANG, Feng
  Shenzhen, Guangdong 518129 (CN)
• LUO, Zhihu
  Shenzhen, Guangdong 518129 (CN)
• JIN, Zhe
  Shenzhen, Guangdong 518129 (CN)

(74) Representative: **Isarpatent**
**Patent- und Rechtsanwälte**
**Barth Hassa Peckmann & Partner mbB**
**Friedrichstraße 31**
**80801 München (DE)**

(54) **COMMUNICATION METHOD AND APPARATUS**

(57) This application discloses a communication method and apparatus. The method includes: A terminal device receives a first message from a network device, where the first message indicates the terminal device to enter an idle state or an inactive state; and enters the idle state or the inactive state. The terminal device monitors a wake-up signal from the network device after waiting for first duration, where an end time point of the first duration is later than a time point of entering the idle state or the inactive state. In this manner, communication efficiency of the terminal device after entering the idle state or the inactive state can be improved.

```
┌─────────────────┐                          ┌─────────────────┐
│ Network device  │                          │ Terminal device │
└─────────────────┘                          └─────────────────┘
```

S501A: First message, where the first message indicates the terminal device to enter an idle state or an inactive state

S502A: Enter the idle state or the inactive state

S503A: Send a paging message and/or a wake-up signal to the terminal device based on first duration, where the first duration is on duration of a wake-up module of the terminal device

S504A: Monitor the wake-up signal from the network device after waiting for the first duration. Optionally, an end time point of the first duration is later than a time point of entering the idle state or the inactive state

FIG. 5A

**Description**

CROSS-REFERENCE TO RELATED APPLICATIONS

This application claims priority to Chinese Patent Application No. 202211042819.5, filed with the China National Intellectual Property Administration on August 29, 2022 and entitled "COMMUNICATION METHOD AND APPARATUS", which is incorporated herein by reference in its entirety.

TECHNICAL FIELD

This application relates to the field of communication technologies, and in particular, to a communication method and apparatus.

BACKGROUND

To reduce power consumption of a terminal device in an idle state or an inactive state, an operating mode for a main module and a secondary module is proposed. Specifically, the main module and the secondary module are disposed in the terminal device, and there is a communication connection between the main module and the secondary module. The main module has high power consumption, and can monitor a paging message, perform radio resource management (radio resource management, RRM) measurement, and the like. When the main module of the terminal device is not turned off, a network device may send a paging message to the terminal device to notify whether the terminal device is paged. The secondary module has low power consumption and cannot monitor the paging message, but can monitor a wake-up signal (wake-up signal, WUS). When the main module of the terminal device is turned off or enters a low power consumption state and the secondary module is turned on, the network device may send the wake-up signal (wake-up signal, WUS) to the terminal device to notify whether the terminal device is paged. After receiving the wake-up signal, the secondary module wakes up the main module, so that the main module restores a function of the main module.
However, it usually takes a period of time for the secondary module to be successfully turned on. Therefore, after entering the idle state or the inactive state, the terminal device may encounter a case in which the main module is turned off but the secondary module is not completely turned on. As a result, the terminal device can monitor neither the wake-up signal nor the paging message. Because the network device considers that the terminal device in the idle state or the inactive state can be notified, by using the wake-up signal, whether the terminal device is paged, the network device may still notify, by using the wake-up signal, whether the terminal device is paged. As a result, the terminal device actually does not learn whether the terminal device is paged, but the network device mistakenly considers that the terminal device has been notified whether the terminal device is paged, and does not notify the terminal device again at least in a short period of time, affecting communication efficiency.
Based on this, how to ensure communication efficiency of the terminal device after the terminal device enters the idle state or the inactive state is an urgent problem that needs to be resolved currently.

SUMMARY

A communication method and apparatus are provided to improve communication efficiency of a terminal device after the terminal device enters an idle state or an inactive state.
An embodiment of this application provides a communication method. The method includes two implementation solutions. For one implementation solution, refer to content in the following first aspect. For the other implementation solution, refer to content in the following second aspect. In both the first aspect and the second aspect, the two implementation solutions are performed from a perspective of a terminal device. The following third aspect provides descriptions from a perspective of a network device. For a network device that interacts with the terminal device in the first aspect and the second aspect, refer to content in the third aspect.
According to a first aspect, this application provides a communication method, applied to a terminal device. The method may be performed by the terminal device, or may be performed by a component (for example, a processor, a chip, or a chip system) of the terminal device. This is not specifically limited in this application. The method may specifically include the following steps: receiving a first message from a network device, where the first message indicates the terminal device to enter an idle state or an inactive state; entering the idle state or the inactive state; and monitoring a wake-up signal from the network device after waiting for first duration. An end time point of the first duration is later than a time point of entering the idle state or the inactive state.
In the solution of this application, the terminal device receives the first message from the network device, where the first message indicates the terminal device to enter the idle state or the inactive state. The terminal device enters the idle state or the inactive state based on the first message; and monitors the wake-up signal from the network device after waiting for the first duration, where the end time point of the first duration is later than the time point at which the terminal device enters the idle state or the inactive state. In this manner, communication efficiency of the terminal device after entering the idle state or the inactive state can be improved. For example, in some cases, after entering the idle state or the inactive state, the terminal device may not immediately monitor the wake-up signal from the network device. Therefore, the terminal device monitors the wake-up signal from the network device after waiting for specific duration, so that the terminal device does not generate additional monitoring overheads, and it can be ensured that the terminal device can accurately monitor the wake-up signal from the network device.

In addition, the implementation solution of this application is also applicable to a case in which the terminal device enters a low power consumption state, to ensure that the terminal device can accurately monitor a notification (for example, the wake-up signal or a paging message) of the network device.

In an implementation, the first duration is on duration of a wake-up module of the terminal device.

In this embodiment of this application, the first duration is a time period required from a time point at which the wake-up module of the terminal device is turned on to a time point at which the wake-up module can normally monitor the wake-up signal.

Optionally, the first duration includes one or both of the following two items: a time period (that is, duration) from a time point at which the wake-up module loads a configuration parameter of the wake-up module to a time point at which the wake-up module normally receives the wake-up signal, or a time period (that is, duration) in which the terminal device decodes a signal including the configuration parameter of the wake-up module.

For example, the wake-up module may be a wake-up receiver, and the wake-up signal sent by the network device may be a WUS.

In this implementation, after entering the idle state or the inactive state, the terminal device monitors the wake-up signal from the network device after the wake-up module of the terminal device is completely turned on. Therefore, after entering the idle state or the inactive state, the terminal device can effectively monitor the wake-up signal from the network device by using the wake-up module.

In this embodiment of this application, specifically, there may be, but not limited to, the following two implementations in which the terminal device monitors the paging message or the wake-up signal from the network device after entering the idle state or the inactive state.

In a first implementation, the method further includes: monitoring the paging message from the network device after entering the idle state or the inactive state and before the first duration ends. A size level of the first duration is a 100-millisecond magnitude order.

The 100-millisecond magnitude order may be understood as satisfying a positive integer multiple of 100 milliseconds (ms). For example, the first duration=N*100 ms, where N is a positive integer.

For example, when the first duration is long (in the 100-millisecond magnitude order), after the terminal device enters the idle state or the inactive state and before the first duration ends, the terminal device may not turn off a main module of the terminal device, and monitors the paging message from the network device by using the main module.

In the first implementation, because the first duration is long, after entering the idle state or the inactive state, the terminal device may still monitor the paging message from the network device by using the main module, so that it can be ensured that the terminal device can monitor the notification of the network device.

In a second implementation, the method further includes: skipping monitoring the paging message from the network device after entering the idle state or the inactive state and before the first duration ends. A size level of the first duration is a 10-millisecond magnitude order.

The 10-millisecond magnitude order may be understood as satisfying a positive integer multiple of 10 milliseconds (ms). For example, the first duration=N*10 ms, where N is a positive integer not greater than 9.

In the second implementation, because the first duration is short, after entering the idle state or the inactive state, the terminal device may not monitor the paging message from the network device in a short period of time, so that a protocol is simplified at a low delay cost.

In an implementation, the method further includes: skipping monitoring the wake-up signal from the network device after entering the idle state or the inactive state and before the first duration ends; and skipping monitoring the paging message from the network device after the first duration ends.

In this implementation, it can be learned that the terminal device does not monitor the wake-up signal from the network device after entering the idle state or the inactive state and before the first duration ends, and does not monitor the paging message from the network device after the first duration ends, so that the terminal device accurately monitors the notification of the network device, to avoid causing additional monitoring overheads.

In an implementation, a start time point of the first duration is one of the following: (1) a time point at which the first message is received; (2) a time point at which receiving of the first message is acknowledged; (3) a time point at which the first message is successfully decoded; or (4) a time point at which third duration elapses after the first message is received. Optionally, the third duration may be 10 milliseconds, 16 milliseconds, or 60 milliseconds.

Optionally, the terminal device starts to turn on the wake-up module at the start time point of the first duration.

For example, the time point at which receiving of the first message is acknowledged may be a time point at which a lower layer (for example, a physical layer or a MAC layer) of the terminal device indicates that receiving of the first message is successfully acknowledged.

In this implementation, the start time point and the end time point of the first duration can be set more flexibly.

In an implementation, the method further includes: determining to monitor the wake-up signal from the network device in a first manner, where the first manner is one of the following: (1) monitoring the wake-up signal from the network device after waiting for the first duration; (2) monitoring the wake-up signal from the network device after waiting for the first duration, and monitoring the paging message from the network device after entering the idle state or the inactive state and before the first duration ends; or (3) monitoring the wake-up signal from the network device after waiting for the first duration, and skipping monitoring the paging message from the network device after entering the idle state or the inactive state and before the first duration ends.

In this implementation, before performing the solution, the terminal device may further first determine an appropriate manner of monitoring the wake-up signal from the network device, and then perform the solution in the determined manner, to ensure rationality and accuracy of monitoring.

In an implementation, the determining to monitor the wake-up signal from the network device in a first manner includes: determining, based on the first duration, to monitor the wake-up signal from the network device in the first manner; or the method further includes:

receiving first indication information from the network device; and the determining to monitor the wake-up signal from the network device in a first manner includes: determining, based on the first indication information, to monitor the wake-up signal from the network device in the first manner.

In this implementation, it can be learned that the terminal device may determine, based on the first duration, to monitor the wake-up signal from the network device in the first manner, or may determine, based on the indication information from the network device, to monitor the wake-up signal from the network device in the first manner. In other words, the network device determines, for the terminal device, a manner of monitoring the wake-up signal from the network device. In this implementation, flexibility of determining the monitoring manner of the terminal device can be higher.

In an implementation, the determining to monitor the wake-up signal from the network device in a first manner includes: determining whether to monitor the wake-up signal from the network device in the first manner or a second manner, where the second manner is one of the following: (1) monitoring the wake-up signal from the network device after waiting for the first duration, and monitoring the paging message from the network device after entering the idle state or the inactive state and before the first duration ends; (2) monitoring the wake-up signal from the network device after waiting for the first duration, and skipping monitoring the paging message from the network device after entering the idle state or the inactive state and before the first duration ends; or (3) entering the idle state or the inactive state based on the first duration, and monitoring the wake-up signal from the network device after entering the idle state or the inactive state.

In this implementation, the terminal device may flexibly select an appropriate manner from the first manner and the second manner to monitor the wake-up signal from the network device, so that monitoring effectiveness and accuracy of the terminal device can be ensured.

According to a second aspect, this application provides a communication method, applied to a terminal device. The method may be performed by the terminal device, or may be performed by a component (for example, a processor, a chip, or a chip system) of the terminal device. This is not specifically limited in this application. The method may specifically include the following steps: receiving a first message from a network device, where the first message indicates the terminal device to enter an idle state or an inactive state; and entering the idle state or the inactive state based on first duration, where the first duration is on duration of a wake-up module of the terminal device.

The first duration is a time period required from a time point at which the wake-up module of the terminal device is turned on to a time point at which the wake-up module can normally monitor a wake-up signal.

Optionally, the first duration includes one or both of the following two items: a time period (that is, duration) from a time point at which the wake-up module loads a configuration parameter of the wake-up module to a time point at which the wake-up module normally receives the wake-up signal, or a time period (that is, duration) in which the terminal device decodes a signal including the configuration parameter of the wake-up module.

For example, the wake-up module may be a wake-up receiver, and the wake-up signal sent by the network device may be a WUS.

In the solution of this application, the terminal device receives the first message from the network device, where the first message indicates the terminal device to enter the idle state or the inactive state; and the terminal device may enter the idle state or the inactive state based on the first duration, where the first duration is the on duration of the wake-up module of the terminal device. In this manner, communication efficiency of the terminal device after entering the idle state or the inactive state can be improved. For example, in some cases, in the solution, after receiving the first message indicating to enter the idle state or the inactive state from the network device, the terminal device determines, based on the on duration of the wake-up module of the terminal device, time for entering the idle state or the inactive state. Therefore, it can be ensured that the terminal device in the idle state or the inactive state can effectively monitor the wake-up signal from the network device.

In addition, the implementation solution of this application is also applicable to a case in which the terminal device enters a low power consumption state, to ensure that the terminal device can accurately monitor a notification (for example, the wake-up signal or a paging message) of the network device.

In an implementation, the entering the idle state or the inactive state based on first duration includes: entering the idle state or the inactive state at a later one of an end time point of the first duration and a first time point, where the first time point is an earlier one of an end time point of second duration and a second time point, the second duration is 60 milliseconds, and the second time point is a time point at which receiving of the first message is acknowledged.

In this embodiment of this application, that the second time point is a time point at which receiving of the first message is acknowledged may be understood as a time point at which a lower layer (for example, a physical layer or a MAC layer) of the terminal device indicates to an upper layer of the terminal device that receiving of the first message is successfully acknowledged. The second duration may be understood as 60 ms elapsing after the terminal device receives the first message.

In this implementation, it can be learned that in an existing solution, after receiving the first message, the terminal device may enter the idle state or the inactive state based on an earliest time point in the second duration and the second time point. However, in the solution of this application, the terminal device waits for the wake-up module of the terminal device to be completely turned on, and then enters the idle state or the inactive state (equivalent to modifying time at which the terminal device enters the idle state or the inactive state in the existing solution), to ensure that after entering the idle state or the inactive state, the terminal device can effectively monitor the wake-up signal from the network device by using the wake-up module.

In an implementation, the method further includes: monitoring the wake-up signal from the network device after entering the idle state or the inactive state.

According to the implementation method, after entering the idle state or the inactive state, the terminal device can effectively monitor the wake-up signal from the network device.

In an implementation, a size level of the first duration is a 10-millisecond magnitude order.

The 10-millisecond magnitude order may be understood as satisfying a positive integer multiple of 10 milliseconds (ms). For example, the first duration=N*10 ms, where N is a positive integer not greater than 9.

In this implementation, it can be learned that when the first duration is short (that is, in the 10-ms magnitude order), the foregoing solution may be used to monitor the wake-up signal from the network device.

In an implementation, the method further includes: determining to monitor the wake-up signal from the network device in a second manner, where the second manner is to enter the idle state or the inactive state based on the first duration and monitor the wake-up signal from the network device after entering the idle state or the inactive state.

In this implementation, before performing the solution, the terminal device may further first determine an appropriate manner of monitoring the wake-up signal from the network device, and then perform the solution in the determined manner, to ensure rationality and accuracy of monitoring.

In an implementation, the determining to monitor the wake-up signal from the network device in a second manner includes: determining, based on the first duration, to monitor the wake-up signal from the network device in the second manner; or the method further includes: receiving first indication information from the network device, and the determining to monitor the wake-up signal from the network device in a second manner includes: determining, based on the first indication information, to monitor the wake-up signal from the network device in the second manner.

In this implementation, it can be learned that the terminal device may determine, based on the first duration, to monitor the wake-up signal from the network device in the second manner, or may determine, based on the indication information from the network device, to monitor the wake-up signal from the network device in the second manner. In other words, the network device determines, for the terminal device, a manner of monitoring the wake-up signal from the network device. In this implementation, flexibility of determining the monitoring manner of the terminal device can be higher.

In an implementation, the determining to monitor the wake-up signal from the network device in a second manner includes: determining whether to monitor the wake-up signal from the network device in a first manner or the second manner, where the first manner is one of the following: (1) monitoring the wake-up signal from the network device after waiting for the first duration; (2) monitoring the wake-up signal from the network device after waiting for the first duration, and monitoring the paging message from the network device after entering the idle state or the inactive state and before the first duration ends; or (3) monitoring the wake-up signal from the network device after waiting for the first duration, and skipping monitoring the paging message from the network device after entering the idle state or the inactive state and before the first duration ends.

The second manner is one of the following: (1) monitoring the wake-up signal from the network device after waiting for the first duration, and monitoring the paging message from the network device after entering the idle state or the inactive state and before the first duration ends; (2) monitoring the wake-up signal from the network device after waiting for the first duration, and skipping monitoring the paging message from the network device after entering the idle state or the inactive state and before the first duration ends; or (3) entering the idle state or the inactive state based on the first duration, and monitoring the wake-up signal from the network device after entering the idle state or the inactive state.

In this implementation, the terminal device may flexibly select an appropriate manner from the first manner and the second manner to monitor the wake-up signal from the network device, so that monitoring effectiveness and accuracy of the terminal device can be ensured.

According to a third aspect, this application provides a communication method, applied to a network device. The method may be performed by the network device, or may be performed by a component (for example, a processor, a chip, or a chip system) of the network device. This is not specifically limited in this application. The method may specifically include the following steps: sending a first message to a terminal device, where the first message indicates the terminal device to enter an idle state or an inactive state; and sending a paging message and/or a wake-up signal to the terminal device based on first duration, where the first duration is on duration of a wake-up module of the terminal device.

The first duration is a time period required from a time point at which the wake-up module of the terminal device is turned on to a time point at which the wake-up module can normally monitor the wake-up signal.

In the solution of this application, the network device sends the first message to the terminal device, where the first message indicates the terminal device to enter the idle state or the inactive state; and then the network device sends the paging message and/or the wake-up signal to the terminal device based on the first duration. The first duration is the on duration of the wake-up module of the terminal device. Therefore, it can be learned that in the solution, after sending, to the terminal device, the first message indicating to enter the idle state or the inactive state, the network device notifies the terminal device (for example, the paging message or the wake-up signal) based on the on duration of the wake-up module of the terminal device, so that it can be ensured that the terminal device in the idle state or the inactive state can effectively monitor a notification of the network device.

In a possible implementation, the sending a paging message and/or a wake-up signal to the terminal device based on first duration includes: sending the paging message to the terminal device after determining that the terminal device enters the idle state or the inactive state, and before the first duration ends; and sending the wake-up signal to the terminal device after the first duration ends. A size level of the first duration is a 100-millisecond magnitude order.

In this implementation, it can be learned that when the first duration is long (in the 100-millisecond magnitude order), the network device may send the paging message to the terminal device after determining that the terminal device enters the idle state or the inactive state, and before the first duration ends, so that the terminal device can effectively monitor the paging message at the time. The network device sends the wake-up signal to the terminal device after the first duration ends, so that the terminal device can effectively monitor the wake-up signal at the time. Therefore, in this manner, the network device does not generate additional transmission overheads, and it can be ensured that the terminal device can effectively monitor the notification of the network device.

In a possible implementation, the sending a paging message and/or a wake-up signal to the terminal device based on first duration includes: after sending the first message to the terminal device, skipping sending the paging message and the wake-up signal to the terminal device before the first duration ends, and sending the wake-up signal to the terminal device after the first duration ends. A size level of the first duration is a 10-millisecond magnitude order.

In this implementation, when the first duration is short (in the 10-millisecond magnitude order), after sending the first message to the terminal device, the network device does not send the paging message and the wake-up signal to the terminal device before the first duration ends, so that a protocol is simplified at a low delay cost, and additional transmission overheads of the network device can also be avoided. The network device sends the wake-up signal to the terminal device after the first duration ends, to ensure that the terminal device can effectively monitor the wake-up signal from the network device.

In a possible implementation, the method further includes: sending first indication information to the terminal device, where the first indication information indicates a manner in which the terminal device monitors the wake-up signal from the network device. Optionally, the manner (the manner in which the terminal device monitors the wake-up signal from the network device) is determined by the network device based on the first duration.

In this implementation, it can be learned that the network device may further determine an appropriate monitoring manner for the terminal device based on the first duration of the terminal device, and send indication information to the terminal device, to indicate, to the terminal device, the manner in which the terminal device monitors the wake-up signal from the network device.

In a possible implementation, the first duration is from the terminal device, or the first duration is predefined. In this implementation, it can be learned that the first duration may be reported by the terminal device to the network device, or the first duration is predefined and known to both the terminal device and the network device.

In a possible implementation, the first duration includes any one or more of the following: a time period from a time point at which the wake-up module loads a configuration parameter of the wake-up module to a time point at which the wake-up module normally receives the wake-up signal, or a time period in which the terminal device decodes a signal including the configuration parameter of the wake-up module. In this implementation, time included within the on duration of the wake-up module of the terminal device can be learned of.

According to a fourth aspect, an embodiment of this application further provides a communication apparatus. The communication apparatus may be configured to perform the method in the first aspect. The communication apparatus may be a terminal device, an apparatus (for example, a chip, a chip system, or a circuit) in the terminal device, or an apparatus that can be used together with the terminal device.

In a possible implementation, the communication apparatus may include modules or units that perform the corresponding methods/operations/steps/actions described in the first aspect. The module or unit may be implemented by a hardware circuit, software, or a combination of a hardware circuit and software. In a possible implementation, the communication apparatus may include a processing module and a transceiver module. The processing module is configured to invoke the transceiver module to perform a receiving function and/or a sending function.

In a possible implementation, the communication apparatus includes a transceiver unit and a processing unit. The processing unit may be configured to invoke the transceiver unit to perform a receiving function and/or a sending function. The transceiver unit is configured to receive a first message from a network device, where the first message indicates the terminal device to enter an idle state or an inactive state; and enter the idle state or the inactive state. The transceiver unit is further configured to monitor a wake-up signal from the network device after waiting for first duration, where an end time point of the first duration is later than a time point of entering the idle state or the inactive state.

In a possible implementation, the first duration is on duration of a wake-up module of the terminal device.

In a possible implementation, the transceiver unit is further configured to monitor a paging message from the network device after entering the idle state or the inactive state and before the first duration ends.

In a possible implementation, a size level of the first duration is a 100-millisecond magnitude order.

In a possible implementation, the transceiver unit does not monitor the paging message from the network device after entering the idle state or the inactive state and before the first duration ends.

In a possible implementation, a size level of the first duration is a 10-millisecond magnitude order.

In a possible implementation, the transceiver unit does not monitor the wake-up signal from the network device after entering the idle state or the inactive state and before the first duration ends; and does not monitor the paging message from the network device after the first duration ends.

In a possible implementation, a start time point of the first duration is one of the following: (1) a time point at which the first message is received; (2) a time point at which receiving of the first message is acknowledged; (3) a time point at which the first message is successfully decoded; or (4) a time point at which third duration elapses after the first message is received. Optionally, the third duration may be 10 milliseconds, 16 milliseconds, or 60 milliseconds.

According to a fifth aspect, an embodiment of this application further provides a communication apparatus. The communication apparatus may perform the method in the second aspect. The communication apparatus may be a terminal device, an apparatus (for example, a chip, a chip system, or a circuit) in the terminal device, or an apparatus that can be used together with the terminal device.

In a possible implementation, the communication apparatus may include modules or units that perform the corresponding methods/operations/steps/actions described in the second aspect. The module or unit may be implemented by a hardware circuit, software, or a combination of a hardware circuit and software. In a possible implementation, the communication apparatus may include a processing module and a transceiver module. The processing module is configured to invoke the transceiver module to perform a receiving function and/or a sending function.

In a possible implementation, the communication apparatus includes a transceiver unit and a processing unit. The processing unit may be configured to invoke the transceiver unit to perform a receiving function and/or a sending function. The transceiver unit is configured to receive a first message from a network device, where the first message indicates the terminal device to enter an idle state or an inactive state. The processing unit is configured to enter the idle state or the inactive state based on first duration, where the first duration is on duration of a wake-up module of the terminal device.

In a possible implementation, when entering the idle state or the inactive state based on the first duration, the processing unit is specifically configured to enter the idle state or the inactive state at a later one of an end time point of the first duration and a first time point, where the first time point is an earlier one of an end time point of second duration and a second time point, the second duration is 60 milliseconds, and the second time point is a time point at which receiving of the first message is acknowledged.

In a possible implementation, the transceiver unit is further configured to monitor a wake-up signal from the network device after entering the idle state or the inactive state.

In a possible implementation, a size level of the first duration is a 10-ms magnitude order.

In a possible implementation, the transceiver unit is further configured to determine to monitor the wake-up signal from the network device in a second manner, where the second manner is to enter the idle state or the inactive state based on the first duration and monitor the wake-up signal from the network device after entering the idle state or the inactive state.

According to a sixth aspect, an embodiment of this application further provides a communication apparatus. The communication apparatus may be configured to perform the method in the third aspect. The communication apparatus may be a network device, an apparatus (for example, a chip, a chip system, or a circuit) in the network device, or an apparatus that can be used together with the network device. In a possible implementation, the communication apparatus may include modules or units that perform the corresponding methods/operations/steps/actions described in the third aspect. The module or unit may be implemented by a hardware circuit, software, or a combination of a hardware circuit and software. In a possible implementation, the communication apparatus may include a processing module and a transceiver module. The processing module is configured to invoke the transceiver module to perform a receiving function and/or a sending function.

In a possible implementation, the communication apparatus includes a transceiver unit and a processing unit. The transceiver unit is configured to send a first message to a terminal device, where the first message indicates the terminal device to enter an idle state or an inactive state; and send a paging message and/or a wake-up signal to the terminal device based on first duration, where the first duration is on duration of a wake-up module of the terminal device.

In a possible implementation, when sending the paging message and/or the wake-up signal to the terminal device based on the first duration, the transceiver unit is specifically configured to send the paging message to the terminal device after determining that the terminal device enters the idle state or the inactive state, and before the first duration ends; and send the wake-up signal to the terminal device after the first duration ends.

In a possible implementation, a size level of the first duration is a 100-millisecond magnitude order.

In a possible implementation, when sending the paging message and/or the wake-up signal to the terminal device based on the first duration, the transceiver unit is specifically configured to: after sending the first message to the terminal device, skip sending the paging message and the wake-up signal to the terminal device before the first duration ends, and send the wake-up signal to the terminal device after the first duration ends.

In a possible implementation, a size level of the first duration is a 10-millisecond magnitude order.

In a possible implementation, the transceiver unit is further configured to send first indication information to the terminal device, where the first indication information indicates a manner in which the terminal device monitors the wake-up signal from the network device, and the manner in which the terminal device monitors the wake-up signal from the network device is determined based on the first duration.

In a possible implementation, the first duration is from the terminal device, or the first duration is predefined.

In a possible implementation, the first duration includes any one or more of the following: a time period from a time point at which the wake-up module loads a configuration parameter of the wake-up module to a time point at which the wake-up module normally receives the wake-up signal, or a time period in which the terminal device decodes a signal including the configuration parameter of the wake-up module.

According to a seventh aspect, an embodiment of this application provides a communication apparatus. The apparatus includes at least one processor and an interface circuit. The interface circuit is configured to provide an input and/or an output of a program or instructions for the at least one processor, and the at least one processor is configured to execute the program or the instructions, so that the communication apparatus can implement the method provided in any one of the first aspect or the possible implementations of the first aspect; or execute the program or the instructions, so that the communication apparatus can implement the method provided in any one of the second aspect or the possible implementations of the second aspect.

According to an eighth aspect, an embodiment of this application provides a communication apparatus. The apparatus includes at least one processor and an interface circuit. The interface circuit is configured to provide an input and/or an output of a program or instructions for the at least one processor. The at least one processor is configured to execute the program or the instructions, so that the communication apparatus can implement the method provided in any one of the third aspect or the possible implementations of the third aspect.

According to a ninth aspect, an embodiment of this application provides a computer storage medium. The storage medium stores a software program. When the software program is read and executed by one or more processors, the method provided in any one of the first aspect or the possible implementations of the first aspect can be implemented, the method provided in any one of the second aspect or the possible implementations of the second aspect can be implemented, or the method provided in any one of the third aspect or the possible implementations of the third aspect can be implemented.

According to a tenth aspect, an embodiment of this application provides a computer program product including instructions. When the instructions are run on a computer, the computer is enabled to perform the method provided in any one of the first aspect or the possible implementations of the first aspect, the computer is enabled to perform the method provided in any one of the second aspect or the possible implementations of the second aspect, or the computer is enabled to perform the method provided in any one of the third aspect or the possible implementations of the third aspect.

According to an eleventh aspect, an embodiment of this application provides a chip system. The chip system includes a processor, configured to support a device in implementing a function in the first aspect, configured to support a device in implementing a function in the second aspect, or configured to support a device in implementing a function in the third aspect.

In a possible design, the chip system further includes a memory. The memory is configured to store necessary program instructions and data. The chip system may include a chip, or may include a chip and another discrete component.

According to a twelfth aspect, an embodiment of this application further provides a chip system. The chip system includes a processor and an interface. The interface is configured to obtain a program or instructions. The processor is configured to invoke the program or the instructions to implement or support a device in implementing a function in the first aspect, the processor is configured to invoke the program or the instructions to implement or support a device in implementing a function in the second aspect, or the processor is configured to invoke the program or the instructions to implement or support a device in implementing a function in the third aspect.

In a possible design, the chip system further includes a memory. The memory is configured to store program instructions and data that are necessary for a terminal device. The chip system may include a chip, or may include a chip and another discrete component.

According to a thirteenth aspect, a communication system is provided. The system includes the apparatus (for example, a terminal device) in the first aspect and the apparatus (for example, a network device) in the third aspect.

According to a fourteenth aspect, a communication system is provided. The system includes the apparatus (for example, a terminal device) in the second aspect and the apparatus (for example, a network device) in the third aspect.

According to a fifteenth aspect, a communication method is provided. The method includes the method provided in any one of the first aspect or the possible implementations of the first aspect and the method provided in any one of the third aspect or the possible implementations of the third aspect.

According to a sixteenth aspect, a communication method is provided. The method includes the method provided in any one of the second aspect or the possible implementations of the second aspect and the method provided in any one of the third aspect or the possible implementations of the third aspect.

For technical effects that can be achieved in any one of the fourth aspect and the seventh aspect or the possible implementations of the fourth aspect and the seventh aspect, refer to the descriptions of the technical effects that can be achieved in any one of the first aspect or the possible implementations of the first aspect. For technical effects that can be achieved in any one of the fifth aspect and the seventh aspect or the possible implementations of the fifth aspect and the seventh aspect, refer to the descriptions of the technical effects that can be achieved in any one of the second aspect or the possible implementations of the second aspect. For technical effects that can be achieved in any one of the sixth aspect and the eighth aspect or the possible implementations of the sixth aspect and the eighth aspect, refer to the descriptions of the technical effects that can be achieved in any one of the third aspect or the possible implementations of the third aspect. Details are not described herein again.

BRIEF DESCRIPTION OF DRAWINGS

FIG. 1 is a diagram of a communication system to which a communication method is applicable according to an embodiment of this application;
FIG. 2 is a diagram of time at which a terminal device enters an idle state or an inactive state after receiving an RRC release message;
FIG. 3 is a diagram of distribution of PFs and POs;
FIG. 4 is a diagram of modules in a terminal device according to an embodiment of this application;
FIG. 5A is a schematic flowchart of a communication method according to an embodiment of this application;
FIG. 5B is a schematic flowchart of another communication method according to an embodiment of this application;
FIG. 6A is a time sequence diagram of a specific embodiment 1 according to an embodiment of this application;
FIG. 6B is a time sequence diagram of a specific embodiment 2 according to an embodiment of this application;
FIG. 7A is a time sequence diagram of a specific embodiment 3 according to an embodiment of this application;
FIG. 7B is a time sequence diagram of a specific embodiment 3 according to an embodiment of this application;
FIG. 7C is a time sequence diagram of a specific embodiment 3 according to an embodiment of this application;
FIG. 7D is a time sequence diagram of a specific embodiment 3 according to an embodiment of this application;
FIG. 7E is a time sequence diagram of a specific embodiment 3 according to an embodiment of this application;
FIG. 7F is a time sequence diagram of a specific embodiment 3 according to an embodiment of this application;
FIG. 8 is a diagram of a structure of a communication apparatus according to an embodiment of this application;
FIG. 9 is a diagram of a structure of a communication apparatus according to an embodiment of this application; and
FIG. 10 is a diagram of an apparatus structure of a chip according to an embodiment of this application.

DESCRIPTION OF EMBODIMENTS

The following describes the technical solutions in embodiments of this application with reference to the accompanying drawings in embodiments of this application.

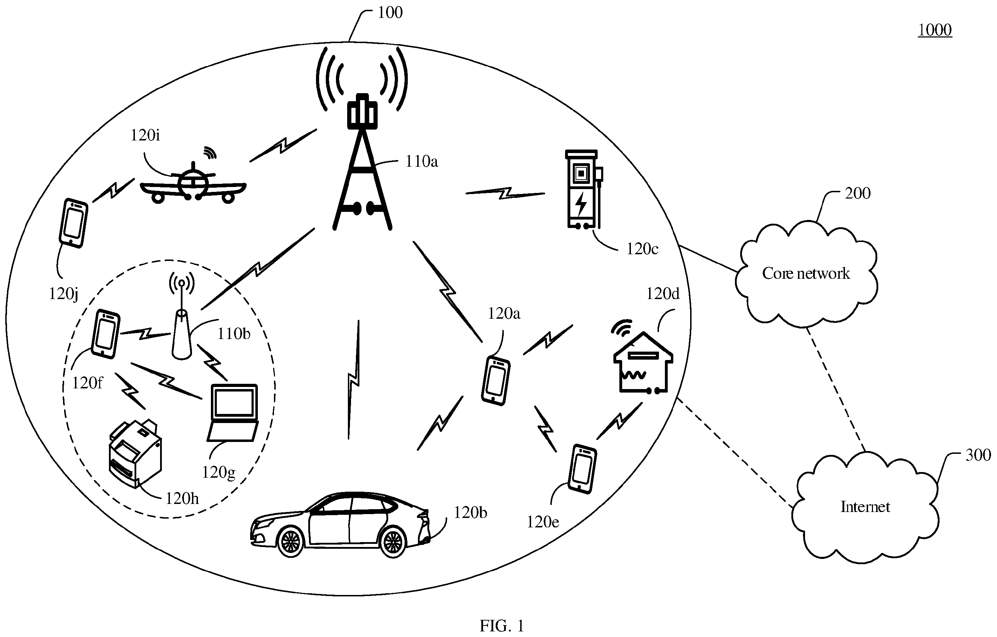

FIG. 1 is a diagram of an architecture of a communication system to which an embodiment of this application is applied. As shown in FIG. 1, the communication system 1000 includes a network device 100 and a core network 200. Optionally, the communication system 1000 may further include an internet 300. The network device 100 may include at least one network device, for example, 110a and 110b in FIG. 1, and may further include at least one terminal device, for example, 120a to 120j in FIG. 1. 110a is a base station, 110b is a micro base station, 120a, 120e, 120f, and 120j are mobile phones, 120b is a vehicle, 120c is a fuel dispenser, 120d is a home access node (home access point, HAP) deployed indoors or outdoors, 120g is a notebook computer, 120h is a printer, and 120i is an uncrewed aerial vehicle.

In FIG. 1, the terminal device may be connected to the network device, and the network device may be connected to a core network device in the core network. The core network device and the network device may be different physical devices independent of each other; functions of the core network device and logical functions of the network device may be integrated into a same physical device; or some functions of the core network device and some functions of the radio network device may be integrated into one physical device. Terminal devices may be connected to each other and network devices may be connected to each other in a wired or wireless manner. FIG. 1 is merely a diagram. The communication system may further include another device, for example, a wireless relay device and a wireless backhaul device, which are not drawn in FIG. 1.

The following describes the core network device, the network device, and the terminal device.

(1) Core network device

The core network device is a network device in a core network in a mobile communication network, and is configured to implement a function of the core network.

The core network may be usually divided into a control plane and a user plane based on logical functions. In the core network, a network element responsible for a control plane function may be collectively referred to as a control plane network element, and a network element responsible for a user plane function may be collectively referred to as a user plane network element. In embodiments of this application, the core network device is mainly the control plane network element, for example, an access and mobility management function (access and mobility management function, AMF).

(2) Network device

The network device is a node in a radio access network (radio access network, RAN), may also be referred to as a base station, and may further be referred to as a RAN node (or device). Some examples of the network device are: a next generation NodeB (next generation NodeB, gNB), a next generation evolved NodeB (next generation evolved NodeB, Ng-eNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, home evolved NodeB, or home NodeB, HNB), a baseband unit (baseband unit, BBU), and a wireless fidelity (wireless fidelity, Wi-Fi) access point (access point, AP). The network device may alternatively be a satellite, and the satellite may also be referred to as a high-altitude platform, a high-altitude aircraft, or a satellite base station. Alternatively, the network device may be another device that has a network device function. For example, the network device may be a device that functions as a network device in device-to-device (device-to-device, D2D) communication. The network device may alternatively be a network device in a possible future communication system.

In some deployments, the network device may include a central unit (central unit, CU) and a distributed unit (distributed unit, DU). The network device may further include an active antenna unit (active antenna unit, AAU). The CU implements some functions of the network device, and the DU implements some other functions of the network device. For example, the CU is responsible for processing a non-real-time protocol and service, and implementing functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a medium access control (medium access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified as a network device in the RAN, or a network device in a core network (core network, CN). This is not limited in this application.

In embodiments of this application, an apparatus configured to implement a function of the network device may be a network device, or may be an apparatus that can support the network device in implementing the function, for example, a chip system. The apparatus may be installed in the network device. The chip system may include a chip, or may include a chip and another discrete component. In the technical solutions provided in embodiments of this application, an example in which the apparatus configured to implement the function of the network device is the network device is used to describe the technical solutions provided in embodiments of this application.

(3) Terminal device

The terminal device may also be referred to as a terminal, user equipment (user equipment, UE), a mobile station, a mobile terminal, or the like. The terminal device may be widely used in various scenarios, for example, device-to-device (device-to-device, D2D), vehicle-to-everything (vehicle-to-everything, V2X) communication, machine type communication (machine type communication, MTC), internet of things (internet of things, IoT), virtual reality, augmented reality, industrial control, self-driving, telemedicine, a smart grid, smart furniture, a smart office, smart wearable, smart transportation, and a smart city. The terminal device may be a mobile phone, a tablet computer, a computer having a wireless transceiver function, a wearable device, a vehicle, an uncrewed aerial vehicle, a helicopter, an airplane, a ship, a robot, a robot arm, a smart home device, or the like. A specific technology and a specific device form used by the terminal device are not limited in embodiments of this application.

In embodiments of this application, an apparatus configured to implement a function of the terminal device may be the terminal device, or may be an apparatus that can support the terminal device in implementing the function, for example, a chip system. The apparatus may be installed in the terminal device. In the technical solutions provided in embodiments of this application, an example in which the apparatus configured to implement the function of the terminal device is the terminal device is used to describe the technical solutions provided in embodiments of this application.

In addition, a same terminal device or network device may provide different functions in different application scenarios. For example, the mobile phones in FIG. 1 include 120a, 120e, 120f, and 120j. The mobile phone 120a may access the base station 110a, connect to the vehicle 120b, directly communicate with the mobile phone 120e, and access the HAP. The mobile phone 120e may access the HAP and directly communicate with the mobile phone 120a. The mobile phone 120f may access the micro base station 110b, connect to the notebook computer 120g, and connect to the printer 120h. The mobile phone 120j may control the uncrewed aerial vehicle 120i.

Roles of the network device and the terminal device may be relative. For example, the helicopter or the uncrewed aerial vehicle 120i in FIG. 1 may be configured as a mobile base station. For the terminal device 120j that accesses the network device 100 via 120i, the terminal device 120i is a base station. However, for the base station 110a, 120i is a terminal device. In other words, 110a communicates with 120i according to a wireless air interface protocol. Certainly, communication between 110a and 120i may alternatively be performed according to an interface protocol between base stations. In this case, relative to 110a, 120i is also a base station. Therefore, both the network device and the terminal device may be collectively referred to as communication apparatuses. 110a and 110b in FIG. 1 may be referred to as communication apparatuses having a function of a base station, and 120a to 120j in FIG. 1 may be referred to as communication apparatuses having a function of a terminal device.

The network device and the terminal device may be at fixed locations, or may be movable. The network device and the terminal device may be deployed on the land, including an indoor device, an outdoor device, a handheld device, or a vehicle-mounted device; may be deployed on the water surface; or may be deployed on a plane, a balloon, and an artificial satellite in the air. Application scenarios of the network device and the terminal device are not limited in embodiments of this application.

Communication may be performed between the network device and the terminal device, between the network devices, and between the terminal devices by using a licensed spectrum, or may be performed by using an unlicensed spectrum, or may be performed by using both a licensed spectrum and an unlicensed spectrum. Communication may be performed by using a spectrum below 6 gigahertz (gigahertz, GHz), or may be performed by using a spectrum above 6 GHz, or may be performed by using both a spectrum below 6 GHz and a spectrum above 6 GHz. A spectrum resource for wireless communication is not limited in embodiments of this application.

In the system shown in FIG. 1, to ensure service continuity and communication quality of the terminal device, a common operation of the terminal device may include but is not limited to: RRM measurement and paging (paging) monitoring.

In a mobile communication system, a radio resource control RRC connection status of the terminal device includes three types: an RRC connected state (RRC_connected, connected state for short), an RRC idle state (RRC_idle, idle state for short), and an RRC inactive state (RRC_inactive, inactive state for short).

When the terminal device is in the connected state, there is an RRC connection between the terminal device and the network device, and the terminal device and the network device can communicate with each other through the RRC connection.

When the terminal device is in the idle state, the RRC connection between the terminal device and the network device is disconnected, the network device and the terminal device no longer store context information of the terminal device, and the terminal device may receive broadcast information (for example, a system message) and a paging message that are sent by the network device.

When the terminal device is in the inactive state, the RRC connection between the terminal device and the network device is disconnected, but the network device and the terminal device continue to store the context information of the terminal device. When the terminal device enters the connected state from the inactive state, the network device and the terminal device may quickly establish the RRC connection between the terminal device and the network device based on the stored context information of the terminal device, so that the terminal device can quickly restore to the connected state.

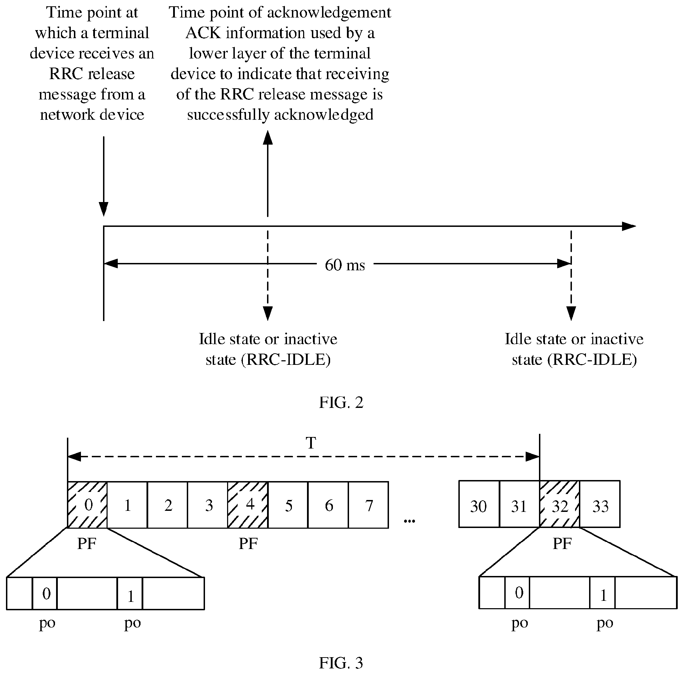

FIG. 2 is a diagram of time at which a terminal device enters an idle state or an inactive state after receiving an RRC release (release) message from a network device. After receiving the RRC release message from the network device, the terminal device enters the idle state and the inactive state only after performing earlier one of the following two manners.

Manner 1: Wait for 60 ms from a time point at which the RRC release message is received.

Manner 2: A lower layer (for example, a physical layer or a MAC layer) of the terminal device indicates to an upper layer of the terminal device that receiving of the RRC release message is acknowledged.

Optionally, after receiving the RRC release message and before entering the idle state or the inactive state, the terminal device further needs to disable a timer, reset MAC, and release a configuration or a resource.

After entering the idle state or the inactive state, the terminal device may monitor paging on a paging occasion of the terminal device based on a configuration of the network device. Herein, that the terminal device monitors paging on a paging occasion of the terminal device may be understood as that the terminal device monitors a paging early indication (paging early indication, PEI), paging DCI, or a paging message based on the configuration of the network device. The paging in this application may be replaced with the PEI, the paging DCI, or the paging message.

For example, when there is no signaling or data service between the terminal device and the network device, wake-up once in each discontinuous reception (discontinuous reception, DRX) cycle occupies main power consumption of the terminal device. To reduce power consumption of the terminal device, it may be set that the terminal device can be woken up only when being triggered. For example, the terminal device is woken up only when being paged by the network device, instead of being woken up once in each DRX cycle.

For ease of understanding of the technical solutions in embodiments of this application, the following describes that the network device configures the terminal device in the idle state and the inactive state to monitor one paging occasion (paging occasion, PO) in each DRX cycle in an conventional technology.

One PO is a set of PDCCH monitoring occasions and may include a plurality of slots. Paging DCI is sent in these slots. One paging frame (paging frame, PF) is one radio frame (Radio Frame), and the paging frame may include one or more POs or a start point of one PO.

A system frame number (system frame number) of the PF satisfies the following formula 1:

$$(\text{SFN}+\text{PF\_offset}) \bmod T=(T \text{ div } N)*(\text{UE\_ID} \bmod N)$$

An index Index(i_s) of the PO satisfies the following formula 2:

$$i\_s=\text{floor}(\text{UE\_ID}/N) \bmod Ns$$

Meanings of parameters in the foregoing formula 1 and formula 2 are shown in Table 1.

Table 1

| Parameter | Meaning |
|---|---|
| T | DRX cycle, min(UE specific DRX, default DRX broadcast in system information) |
| N | Quantity of PFs in each cycle T |
| Ns | Quantity of POs in each PF |
| PF_offset | Offset used for PF |
| UE_ID | 5G-S-TMSI mod 1024 |

The parameters in Table 1 are configured by using PCCH-Config.

A value range of PagingCycle is shown as follows:

$$PagingCycle ::= ENUMERATED\{rf32, rf64, rf128, rf256\}.$$

For example, FIG. 3 shows distribution of PFs and POs. As shown in FIG. 3, T=32 radio frames, N=quarterT=8, Ns=2, and PF_offset=0. It can be learned that one DRX cycle is 32 frames, and eight frames are paging frames (PF). UE_ID mod N indicates that UE_IDs are grouped based on a modulo result, and one of N PFs is allocated to the terminal device. T div N is used to determine an SFN, and indicates that the entire DRX cycle T is divided into N parts, and a time length of each part is T div N.

If there are four terminal devices, UE_IDs of the four terminal devices are 0, 8, 16, 24, and 32 respectively, and the UE_IDs of the four terminal devices mod (mod) 8 are performed separately, obtained results are all 0, that is, it indicates that the four terminal devices all correspond to a $1^{st}$ PF in the DRX cycle. Further, the UE_IDs of the four terminal devices are separately processed according to a formula floor(UE_ID/N) to obtain values 0, 1, 2, 3, and 4 (equivalent to numbers corresponding to the four terminal devices in the $1^{st}$ PF), and the values 0, 1, 2, 3, and 4 corresponding to the four terminal devices are separately divided by Ns (Ns=2), to obtain remainders 0, 1, 0, 1, and 0 respectively. It can be learned that terminal devices whose UE_IDs are 0, 16, and 32 all correspond to a $1^{st}$ PO of the $1^{st}$ PF frame, and terminal devices whose UE_IDs are 8 and 24 both correspond to a $2^{nd}$ PO of the $1^{st}$ PF frame.

According to the foregoing configuration, after obtaining PO location information corresponding to each terminal device, each terminal device may receive, at a corresponding PO location, a PDCCH scrambled by using a P-RNTI, obtain DCI, and further parse information in the DCI.

If paging DCI indicates that the terminal device needs to schedule a PDSCH, the terminal device may obtain a paging message at a corresponding location based on a time-frequency location of a PDSCH resource indicated by the PDCCH.

In the foregoing configuration manner, after entering the idle state or the inactive state, the terminal device may monitor paging from the network device on a paging occasion of the terminal device. If the terminal device detects the paging from the network device, the terminal device may be woken up to enter a normal operating state.

The following describes a wake-up process of the terminal device after the terminal device enters the idle state or the inactive state.

After the terminal device enters the idle state or the inactive state, regardless of whether the terminal device needs to be woken up for a service, the terminal device needs to monitor paging. A paging monitoring process occupies most power consumption of the terminal device in the idle state or the inactive state. Therefore, to further reduce power consumption of the terminal device, the terminal device may use an operating mode for a main module and a secondary module. The following describes functions of the main module and the secondary module in the terminal device.

The main module is a conventional circuit module in the terminal device, is configured to implement various operations and functions of the terminal device, and is also referred to as a main circuit module, a main circuit, a main receiving module, and a main receiver. Because the main module may implement various operations and functions of the terminal device, power consumption of the main module is high in an operating state, and is usually in an mW magnitude order. After the terminal device enters the idle state, the inactive state, a secondary module on state, or a low power consumption state, the main module enters a power saving state (for example, an off state or an extremely low power consumption state). In this case, the main module does not perform operations such as paging monitoring, RRM measurement, and system message receiving, so that power consumption caused by performing the foregoing operations by the terminal device can be effectively reduced. The main module can restore a function of the main module and perform operations such as paging monitoring, RRM, and system message receiving only after being woken up and entering the operating state.

The secondary module consumes less power in the operating state, and is usually in a $\mu$W magnitude order or even nW magnitude order. A signal receiver is disposed inside the secondary module, and can receive a signal of the network device. After the main module enters the power saving state, the secondary module enters the operating state, and monitors a wake-up signal from the network device. After receiving the wake-up signal, the secondary module may wake up the main module, so that the main module enters the operating state and restores the function of the main module. The secondary module may also be referred to as a wake-up radio (wake-up radio, WUR), a wake-up receiver (wake-up receiver, WUR), an ultra-low power wake-up receiver (ultra-low power wake-up receiver), a wake-up radio (wake-up radio), a secondary circuit module, a secondary circuit, a secondary receiving module, and a secondary receiver. Optionally, the wake-up signal may be an excitation signal such as amplitude shift keying (amplitude shift keying, ASK). Optionally, after waking up the main module, the secondary module may switch from the operating state to the power saving state, or the secondary module is always in the operating state. This is not limited in embodiments of this application.

It should be noted that representation forms of the main module and the secondary module are not limited in embodiments of this application. The main module and the secondary module may be independent receivers, or may be independent modules in the terminal device, or may be a module that may implement a WUR function by separately turning on or off the main module.

Based on the foregoing structures of the main module and the secondary module, when entering the idle state, the inactive state, or the low power consumption state, the terminal device may turn on the secondary module, and set the main module to enter the power saving state. After receiving the wake-up signal from the network device, the secondary module wakes up the main module, and the main module enters the operating state, so that the main module can perform operations such as paging monitoring, RRM measurement, and system message receiving, and then access a network to implement a service of the terminal device, thereby finally ensuring a function of the terminal device.

If the terminal device is configured with the secondary module, and it takes no time to turn on the secondary module, after entering the idle state or the inactive state, the terminal device may monitor the wake-up signal based on a configuration of the network device.

However, if the terminal device has the secondary module, and it takes specific time to turn on the secondary module, after the terminal device enters the idle state, the inactive state, or the low power consumption state, the main module is turned off, and the secondary module may not be completely turned on. As a result, the terminal device may not monitor the paging message or the wake-up signal from the network device in a timely manner. Based on this, how to ensure that after entering the idle state and the inactive state or the low power consumption state, the terminal device can accurately monitor the wake-up signal or the paging message from the network device during turning on the secondary module of the terminal device is an urgent problem that needs to be resolved currently.

Therefore, this application provides a communication method. The method includes: A terminal device receives a first message from a network device, where the first message indicates the terminal device to enter an idle state or an inactive state; and enters the idle state or the inactive state. The terminal device monitors a wake-up signal from the network device after waiting for first duration, where an end time point of the first duration is later than a time point of entering the idle state or the inactive state. Therefore, it can be learned that after entering the idle state, the inactive state, or a low power consumption state, the terminal device may not immediately monitor the wake-up signal from the network device. The terminal device monitors the wake-up signal from the network device after specific duration is met, so that the terminal device does not generate additional monitoring overheads, and it can also be ensured that the terminal device can accurately monitor a notification (a paging message or the wake-up signal) of the network device.

In addition, this application further provides another implementation method. The method includes: A terminal device receives a first message from a network device, where the first message indicates the terminal device to enter an idle state or an inactive state. The terminal device enters the idle state or the inactive state based on first duration, where the first duration is on duration of a wake-up module of the terminal device. Therefore, it can be learned that the terminal device in the method may modify, based on the on duration of the wake-up module of the terminal device, time for entering the idle state or the inactive state, to ensure that after entering the idle state, the inactive state, or a low power consumption state, the terminal device can effectively monitor a notification (a paging message or a wake-up signal) from the network device.

It should be noted that the mobile communication system shown in FIG. 1 is used as an example, and does not constitute a limitation on a mobile communication system to which the methods provided in embodiments of this application are applicable. In conclusion, embodiments of this application may be further applied to communication systems of various types and standards, for example, a 5th Generation (5th Generation, 5G) communication system, a 6th Generation (6th Generation, 6G) communication system, a communication system of another future evolved standard, a long term evolution (Long Term Evolution, LTE) communication system, a long term evolution-vehicle (LTE-vehicle, LTE-V) system, and other mobile communication systems.

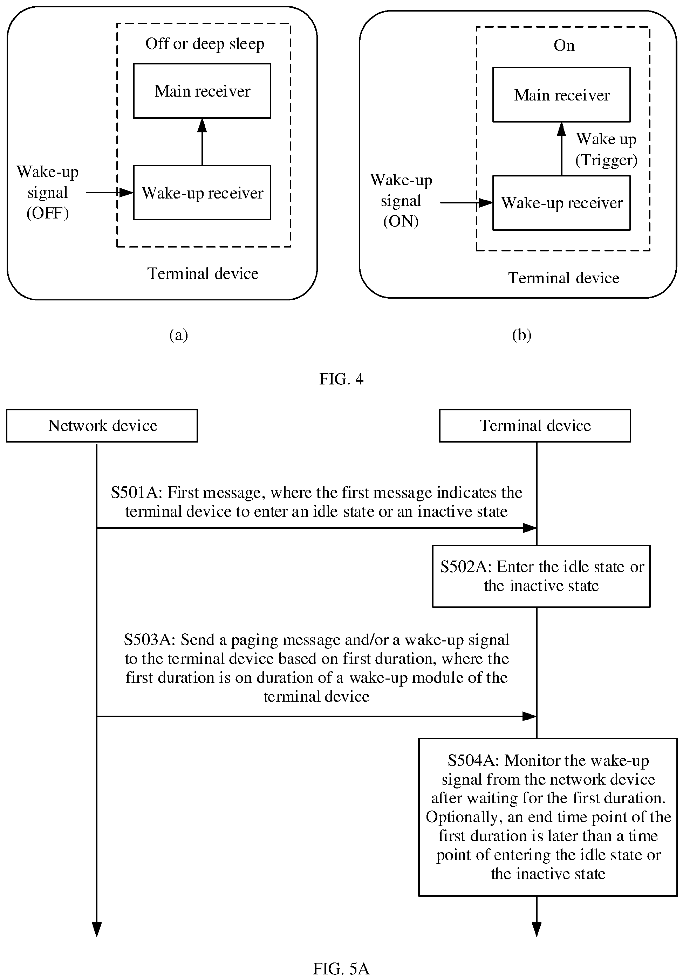

In embodiments of this application, as shown in FIG. 4, a terminal device may include two receivers. A first receiver is a main receiver (equivalent to a main module), and a second receiver is a wake-up receiver (equivalent to a secondary module). The main receiver may be turned off or set to deep sleep, as shown in (a) in FIG. 4. Alternatively, when the main receiver is turned on, as shown in (b) in FIG. 4, the wake-up receiver receives a wake-up signal to wake up the main receiver to be turned on for data transmission and receiving. The wake-up receiver is capable of monitoring the wake-up signal with ultra-low power consumption. After receiving the wake-up signal, the wake-up receiver may trigger wake-up of the main receiver.

The following briefly describes the main receiver and the wake-up receiver in embodiments of this application.

(1) The main receiver may be a receiver that receives a synchronization signal block (synchronization signal block, SSB), a physical downlink control channel (physical downlink control channel PDCCH), a physical downlink shared channel (physical downlink shared channel, PDSCH), or a channel state information reference signal (channel state reference signal, CSI RS). For another example, the main receiver is a receiver that may receive a signal modulated by using binary phase shift keying (binary phase shift keying, BPSK), quadrature phase shift keying (quadrature phase shift keying, QPSK), 16 quadrature amplitude modulation (quadrature amplitude modulation, QAM), 64QAM, or 256QAM. For another example, the main receiver is a receiver that may perform fast Fourier transform (fast Fourier transform, FFT) on a signal or inverse fast Fourier transform (inverse fast Fourier transform, IFFT) on a signal. For another example, the main receiver is a receiver with high precision of a local oscillator.

(2) The wake-up receiver may be a receiver that receives a signal modulated by using on-off keying (on-off keying, OOK) or frequency shift keying (frequency shift keying, FSK), or the wake-up receiver is a receiver that may receive a signal that does not require fast Fourier transform FFT or inverse fast Fourier transform IFFT in a generation or decoding process, or the wake-up receiver is a receiver that may receive a signal encoded by using Manchester encoding.

In embodiments of this application, a signal monitored by the wake-up receiver is referred to as a "WUR signal", a "wake-up signal", a "WUS", a signal transmitted on a wake-up link, and the like.

The WUR signal may be a signal modulated by using on-off keying OOK or frequency shift keying FSK, or may be a signal that does not require fast Fourier transform FFT or inverse fast Fourier transform IFFT in a generation or decoding process, or may be a signal encoded by using Manchester encoding.

The WUS indicates the terminal device to monitor paging or initiate random access. The WUS may also be referred to as a wake-up indication signal. The WUS may be carried in downlink control information (downlink control information, DCI), or may be carried in a specific signal. The specific signal may be modulated based on on-off keying OOK. In this way, the terminal device may detect the WUS by using a simple receiver with low power consumption (for example, a front-end (front-end) receiver).

When OOK is used for modulation, each bit (where the bit may be an encoded bit) corresponds to one symbol (which may also be referred to as a chip (chip)). When the bit is 1, a signal is sent in a length of the symbol (that is, a signal power is not 0 in the length of the symbol). When the bit is 0, no signal is sent in the length of the symbol (that is, the signal power is 0 in the length of the symbol). It should be understood that, there may be a reverse case. To be specific, when the bit is 0, a signal is sent in a length of the symbol (that is, a signal power is not 0 in the length of the symbol). When the bit is 1, no signal is sent in the length of the symbol (that is, the signal power is 0 in the length of the symbol). This is not limited in this application. Optionally, when OOK is used for modulation, one symbol may also carry a plurality of bits.

In embodiments of this application, the wake-up receiver consumes less energy than the main receiver. For example, energy consumption of a signal transmitted on a link used by the wake-up receiver to receive the wake-up signal is lower than energy consumption of a signal that is transmitted on a main link and received by the main receiver. For another example, compared with the main receiver, the wake-up receiver consumes less energy. For another example, the wake-up receiver is a receiver with low precision of a local oscillator. For another example, the wake-up receiver is a receiver that performs envelope detection. For another example, the wake-up receiver is a receiver that does not need to perform FFT or IFFT. These manners facilitate implementation of low power consumption of the wake-up receiver.

In addition, in this application, an "indication" may include a direct indication, an indirect indication, an explicit indication, and an implicit indication. When a piece of indication information is described as indicating A, it may be understood that the indication information carries A, directly indicates A, or indirectly indicates A.

In this application, information indicated by the indication information is referred to as to-be-indicated information. In a specific implementation process, the to-be-indicated information is indicated in a plurality of manners, for example, but not limited to, the following manners: The to-be-indicated information is directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent.

The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmitting end device by sending configuration information to a receiving end device. The configuration information may include, for example, but not limited to, one or a combination of at least two of radio resource control signaling, medium access control MAC layer signaling, and physical layer signaling. The radio resource control signaling includes, for example, radio resource control RRC signaling. The MAC layer signaling includes, for example, a MAC control element (control element, CE). The physical layer signaling includes, for example, downlink control information DCI.

The technical solutions of this application are described below with reference to specific embodiments.

An embodiment of this application provides a communication method. The method may be applied to but is not limited to the architecture of the communication system in FIG. 1, and the method may be performed by a transceiver and/or a processor of a terminal device (or a network device), or may be performed by a chip corresponding to the transceiver and/or the processor. Alternatively, this embodiment may be implemented by a controller or a control device connected to the terminal device (or the network device), and the controller or the control device is configured to manage at least one apparatus including the terminal device (or the network device). In addition, a specific form of a communication apparatus performing this embodiment is not specifically limited in this application. In addition, ordinal numbers such as "first" and "second" mentioned below are used to distinguish between a plurality of objects for ease of description, but are not used to limit a sequence, a time sequence, a priority, or importance of the plurality of objects.

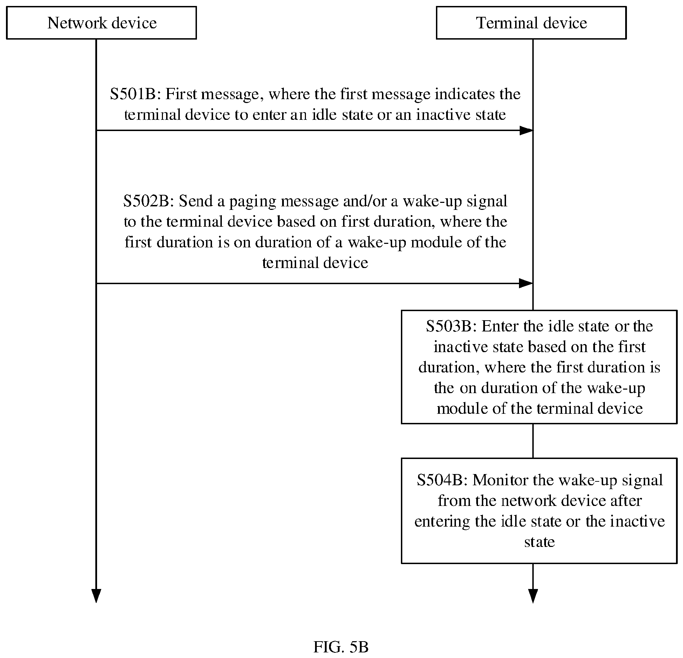

In addition, the communication method provided in this embodiment of this application may include two specific implementation solutions. A schematic flowchart of a method shown in FIG. 5A is an implementation solution provided in an embodiment of this application, and a schematic flowchart of a method shown in FIG. 5B is the other implementation solution provided in an embodiment of this application.

Refer to FIG. 5A. An implementation solution provided in an embodiment of this application is described. A specific procedure of the solution is as follows:
S501A: A network device sends a first message to a terminal device, where the first message indicates the terminal device to enter an idle state or an inactive state.

Correspondingly, the terminal device receives the first message from the network device, where the first message indicates the terminal device to enter the idle state, the inactive state, or a low power consumption state.

For example, the first message is an RRC release message.

In an implementation, the network device sends first indication information to the terminal device, where the first indication information indicates a manner in which the terminal device monitors a wake-up signal from the network device. Optionally, the manner (that is, the manner in which the terminal device monitors the wake-up signal from the network device) is determined by the network device based on first duration. Optionally, the implementation may be performed before step S501A.

Optionally, the first duration is from the terminal device, for example, is reported by the terminal device to the network device; or the first duration is predefined, for example, the first duration is defined in a protocol.

For example, when there is a terminal device whose on duration of a wake-up module is in a 1-ms magnitude order, a terminal device whose on duration of a wake-up module is in a 10-ms magnitude order, and/or a terminal device whose on duration of a wake-up module is in a 100-ms magnitude order, each terminal device may report the on duration of the wake-up module of the terminal device to the network device, that is, the first duration. The network device may determine, based on the first duration reported by each terminal device, whether to send a paging message or a wake-up signal to a corresponding terminal device, or may determine when to send a wake-up signal or a paging message. In other words, the network device may determine a solution in the following first manner or second manner based on the first duration reported by each terminal device, and notify each terminal device of the determined solution by using the foregoing first indication information.

Optionally, if the on duration of the wake-up module of the terminal device is in the 1-ms magnitude order, the duration is shorter than 60 ms and time used for successfully acknowledging receiving of the RRC release message, and the on duration may be ignored. Therefore, the terminal device may not report the on duration (that is, the first duration) of the wake-up module to the network device. In addition, the network device may consider, by default, that the on duration of the wake-up module of the terminal device is in the 1-ms magnitude order or there is no on duration. In this case, the terminal device may turn off a main receiver after receiving of the RRC release message is successfully acknowledged or 60 ms after receiving the RRC release (equivalent to the foregoing first message) from the network device, and monitor or receive the wake-up signal from the network device by using the wake-up module.

S502A: The terminal device enters the idle state or the inactive state.

In step S502A, the terminal device enters the idle state, the inactive state, or the low power consumption state.

For example, the terminal device may enter the idle state or the inactive state based on an earlier one of the two time points shown in FIG. 2 (that is, a time point at which the terminal device receives the RRC release message and 60 ms elapse, and a time point at which the terminal device receives the RRC release message and a lower layer of the terminal device indicates that receiving of the message is successfully acknowledged).

S503A: The network device sends the paging message and/or the wake-up signal to the terminal device based on the first duration, where the first duration is the on duration of the wake-up module of the terminal device.

In this embodiment of this application, the first duration is a time period required from a time point at which the wake-up module of the terminal device is turned on to a time point at which the wake-up module can normally monitor the wake-up signal.

In an implementation, that the network device sends the paging message and/or the wake-up signal to the terminal device based on the first duration includes: sending the paging message to the terminal device after determining that the terminal device enters the idle state, the inactive state, or the low power consumption state, and before the first duration ends; and sending the wake-up signal to the terminal device after the first duration ends.

For example, the network device may determine, in but not limited to the following manners, that the terminal device enters the idle state or the inactive state.

Manner 1: The network device receives an acknowledgment message from the terminal device, where the acknowledgment message is used to indicate to or notify the network device that the terminal device has successfully received the RRC release message. The network device may determine, based on the acknowledgment message, that the terminal device enters the idle state or the inactive state, and use a time point at which the acknowledgment message is received as a time point at which the terminal device enters the idle state or the inactive state.

Manner 2: After the network device sends the RRC release message to the terminal device and 10 milliseconds elapse, the network device uses a time point at which the 10 milliseconds end as a time point of determining that the terminal device enters the idle state or the inactive state.

Manner 3: After the network device sends the RRC release message to the terminal device and 60 milliseconds elapse, the network device uses a time point at which the 60 milliseconds end as a time point of determining that the terminal device enters the idle state or the inactive state.

In the implementation, a size level of the first duration is a 100-millisecond magnitude order.

S504A: The terminal device monitors the wake-up signal from the network device after waiting for the first duration. Optionally, an end time point of the first duration is later than a time point of entering the idle state or the inactive state.

In an implementation, a start time point of the first duration is one of the following:

(1) a time point at which the first message is received,
for example, a time point at which the terminal device receives the first message from the network device;
(2) a time point at which receiving of the first message is acknowledged,
for example, a time point at which the terminal device receives an indication of the lower layer (for example, a physical layer or a MAC layer) of the terminal device, where the indication indicates that receiving of the first message is acknowledged;
(3) a time point at which the first message is successfully decoded,
for example, a time point at which the terminal device determines that the first message is successfully decoded by the terminal device; or
(4) a time point at which third duration elapses after the first message is received, where optionally, the third duration may be 10 milliseconds, 16 milliseconds, or 60 milliseconds.

Optionally, the terminal device starts to turn on the wake-up module at the start time point of the first duration.

In an implementation, before step S504A is performed, the method further includes:
The terminal device determines to monitor the wake-up signal from the network device in the first manner, where the first manner is one of the following:

(1) monitoring the wake-up signal from the network device after waiting for the first duration;
(2) monitoring the wake-up signal from the network device after waiting for the first duration, and monitoring the paging message from the network device after entering the idle state, the inactive state, or the low power consumption state and before the first duration ends; or
(3) monitoring the wake-up signal from the network device after waiting for the first duration, and skipping monitoring the paging message from the network device after entering the idle state, the inactive state, or the low power consumption state and before the first duration ends.

The terminal device may determine, in but not limited to the following two manners, to monitor the wake-up signal from the network device in the first manner.

Manner 1: The terminal device determines, based on the first duration, to monitor the wake-up signal from the network device in the first manner.

Manner 2: The terminal device receives the first indication information from the network device, and determines, based on the first indication information, to monitor the wake-up signal from the network device in the first manner.

In an implementation, that the terminal device determines to monitor the wake-up signal from the network device in the first manner includes: The terminal device determines whether to monitor the wake-up signal from the network device in the first manner or the second manner, where the second manner is one of the following:

(1) monitoring the wake-up signal from the network device after waiting for the first duration, and monitoring the paging message from the network device after entering the idle state, the inactive state, or the low power consumption state and before the first duration ends; (2) monitoring the wake-up signal from the network device after waiting for the first duration, and skipping monitoring the paging message from the network device after entering the idle state, the inactive state, or the low power consumption state and before the first duration ends; or (3) entering the idle state, the inactive state, or the low power consumption state based on the first duration, and monitoring the wake-up signal from the network device after entering the idle state, the inactive state, or the low power consumption state.

When step S504A is performed, the following two implementations may be included, but this not limited thereto.

Implementation 1: The terminal device monitors the paging message from the network device after entering the idle state, the inactive state, or the low power consumption state and before the first duration ends.

In the implementation 1, the size level of the first duration is the 100-millisecond magnitude order, that is, a magnitude of the first duration satisfies a positive integer multiple of 100 milliseconds (ms). For example, the first duration=N*100 ms, where N is a positive integer.

For example, after the terminal device enters the idle state, the inactive state, or the low power consumption state and before the first duration ends, the terminal device keeps the main receiver of the terminal device in an on state, to monitor the paging message from the network device. For a manner in which the terminal device monitors the paging message from the network device, refer to the foregoing existing solution for implementation. After the first duration ends, the terminal device turns off the main module of the terminal device, and monitors the wake-up signal from the network device by using a secondary module of the terminal device.

In the implementation 1, because time (that is, the first duration) for turning on the wake-up module of the terminal device is long (in the 100-millisecond magnitude order), after the terminal device enters the idle state, the inactive state, or the low power consumption state and before the first duration ends (that is, before the wake-up module of the terminal device is completely turned on), the terminal device does not turn off the main module of the terminal device, and therefore does not monitor the wake-up signal from the network device in this period of time, but monitors the paging message from the network device by using the main module, so that the terminal device can obtain notification information of the network device. After the first duration ends (that is, after the wake-up module of the terminal device is completely turned on), the main module of the terminal device is turned off, and the paging message of the network device is no longer monitored, but the wake-up signal of the network device is received by using the wake-up module of the terminal device, to reduce energy consumption and ensure that the terminal device can receive the notification of the network device.

Implementation 2: The terminal device skips monitoring the paging message from the network device after entering the idle state, the inactive state, or the low power consumption state and before the first duration ends.

For example, after the terminal device enters the idle state, the inactive state, or the low power consumption state and before the first duration ends, the terminal device turns off the main module of the terminal device, and skips monitoring the paging message and the wake-up signal from the network device. After the first duration ends, the terminal device monitors the wake-up signal from the network device by using a secondary module of the terminal device.

In the implementation 2, the size level of the first duration is the 10-millisecond magnitude order, that is, a magnitude of the first duration satisfies a positive integer multiple of 10 milliseconds (ms). For example, the first duration=N*10 ms, where N is a positive integer not greater than 9.

In the implementation 2, because time (that is, the first duration) for turning on the wake-up module of the terminal device is not long (in the 10-millisecond magnitude order), after the terminal device enters the idle state, the inactive state, or the low power consumption state and before the first duration ends (that is, before the wake-up module of the terminal device is completely turned on), the terminal device turns off the main module of the terminal device, skips monitoring the paging message from the network device, and skips monitoring the wake-up signal from the network device. After the first duration ends (that is, after the wake-up module of the terminal device is completely turned on), the terminal device monitors the wake-up signal from the network device by using the wake-up module, to simplify a protocol at a low delay cost.

Both the implementation 1 and the implementation 2 may satisfy: The terminal device skips monitoring the wake-up signal from the network device after entering the idle state, the inactive state, or the low power consumption state and before the first duration ends; and skips monitoring the paging message from the network device after the first duration ends.

In conclusion, according to the implementation solution shown in FIG. 5A, when the on duration of the wake-up module of the terminal device is long (in the 100-millisecond magnitude order), it can be ensured that the terminal device can effectively monitor the notification (for example, the paging message or the wake-up signal) of the network device. However, when the on duration of the wake-up module of the terminal device is short (in the 10-millisecond magnitude order), the notification (for example, the paging message or the wake-up signal) of the network device may not be monitored within the on duration of the wake-up module of the terminal device, that is, the protocol is simplified at the low delay cost.

Refer to FIG. 5B. The other implementation solution provided in an embodiment of this application is described. A specific procedure of the solution is as follows:

S501B: A network device sends a first message to a terminal device, where the first message indicates the terminal device to enter an idle state or an inactive state.

Correspondingly, the terminal device receives the first message from the network device, where the first message indicates the terminal device to enter the idle state, the inactive state, or a low power consumption state.

In an implementation, the network device sends first indication information to the terminal device, where the first indication information indicates a manner in which the terminal device monitors a wake-up signal from the network device.

Optionally, the manner (the manner in which the terminal device monitors the wake-up signal from the network device) is determined by the network device based on first duration.

Optionally, the first duration is from the terminal device, for example, is reported by the terminal device to the network device; or the first duration is predefined, for example, the first duration is defined in a protocol.

In the solution of this application, for step S501B, refer to step S501A. Details are not described herein again.

S502B: The network device sends a paging message and/or the wake-up signal to the terminal device based on the first duration, where the first duration is on duration of a wake-up module of the terminal device.

In this embodiment of this application, the first duration is a time period required from a time point at which the wake-up module of the terminal device is turned on to a time point at which the wake-up module can normally monitor the wake-up signal.

In a possible implementation, that the network device sends a paging message and/or the wake-up signal to the terminal device based on the first duration includes: After sending the first message to the terminal device, the network device skips sending the paging message and the wake-up signal to the terminal device before the first duration ends, and sends the wake-up signal to the terminal device after the first duration ends. Optionally, a size level of the first duration is a 10-millisecond magnitude order.

It should be noted that an end time point of the first duration in the possible implementation should be later than a time point at which the terminal device enters the idle state or the inactive state in an conventional technology (that is, a time point at which after the terminal device receives the first message, a lower layer acknowledges that the first message is successfully received or an end time point at which 60 ms elapse after the terminal device receives the first message). However, if the end time point of the first duration is earlier than the time point at which the terminal device enters the idle state or the inactive state in the conventional technology (that is, the time point at which after the terminal device receives the first message, the lower layer acknowledges that the first message is successfully received or the end time point at which 60 ms elapse after the terminal device receives the first message), the network device does not send the wake-up signal to the terminal device after the first duration ends, but sends the wake-up signal to the terminal device after determining that the terminal device enters the idle state, the inactive state, or the low power consumption state.

In the solution of this application, the network device may alternatively not send the paging message and the wake-up signal to the terminal device before determining that the terminal device enters the idle state, the inactive state, or the low power consumption state, and sends the wake-up signal to the terminal device after determining that the terminal device enters the idle state, the inactive state, or the low power consumption state. In this implementation solution, the network device may determine, based on the first duration, that the terminal device enters the idle state, the inactive state, or the low power consumption state. However, the network device in the implementation solution may alternatively determine, in another manner, that the terminal device enters the idle state, the inactive state, or the low power consumption state. For example, the network device receives an acknowledgment message from the terminal device, to indicate to or notify the network device that the terminal device has successfully received the first message. In other words, the network device may determine, based on the acknowledgment message, that the terminal device enters the idle state, the inactive state, or the low power consumption state, and estimate a time point at which the terminal device enters the idle state, the inactive state, or the low power consumption state. This is not specifically limited in this application.

Therefore, the network device does not send the paging message or the wake-up signal to the terminal device before the terminal device enters the idle state, the inactive state, or the low power consumption state, and sends the wake-up signal to the terminal device after the terminal device enters the idle state, the inactive state, or the low power consumption state.

S503B: The terminal device enters the idle state or the inactive state based on the first duration, where the first duration is the on duration of the wake-up module of the terminal device.

In an implementation, a start time point of the first duration is one of the following:

(1) a time point at which the first message is received,
for example, a time point at which the terminal device receives the first message from the network device;
(2) a time point at which receiving of the first message is acknowledged,
for example, a time point at which the terminal device receives an indication of the lower layer (for example, a physical layer or a MAC layer) of the terminal device, where the indication indicates that receiving of the first message is acknowledged;
(3) a time point at which the first message is successfully decoded,
for example, a time point at which the terminal device determines that the first message is successfully decoded by the terminal device; or
(4) a time point at which third duration elapses after the first message is received, where optionally, the third duration may be 10 milliseconds, 16 milliseconds, or 60 milliseconds.

In an implementation, before step S503B is performed, the method further includes: The terminal device determines to monitor the wake-up signal from the network device in a second manner, and that the terminal device determines to monitor the wake-up signal from the network device in a second manner includes: The terminal device determines whether to monitor the wake-up signal from the network device in a first manner or the second manner, where the second manner is one of the following:

(1) monitoring the wake-up signal from the network device after waiting for the first duration, and monitoring the paging message from the network device after entering the idle state, the inactive state, or the low power consumption state and before the first duration ends; (2) monitoring the wake-up signal from the network device after waiting for the first duration, and skipping monitoring the paging message from the network device after entering the idle state, the inactive state, or the low power consumption state and before the first duration ends; or (3) entering the idle state, the inactive state, or the low power consumption state based on the first duration, and monitoring the wake-up signal from the network device after entering the idle state, the inactive state, or the low power consumption state.

The terminal device may determine, in but not limited to the following two manners, to monitor the wake-up signal from the network device in the second manner.

Manner 1: The terminal device determines, based on the first duration, to monitor the wake-up signal from the network device in the second manner.

Manner 2: The terminal device receives the first indication information from the network device, and determines, based on the first indication information, to monitor the wake-up signal from the network device in the second manner.

In an implementation, the terminal device determines to monitor the wake-up signal from the network device in the second manner, where the second manner is to enter the idle state, the inactive state, the low power consumption state based on the first duration and monitor the wake-up signal from the network device after entering the idle state or the inactive state.

When step S503B is performed, in an implementation, that the terminal device enters the idle state, the inactive state, or the low power consumption state based on the first duration includes: The terminal device enters the idle state, the inactive state, or the low power consumption state at a later one of the end time point of the first duration and a first time point, where the first time point is an earlier one of an end time point of second duration and a second time point, the second duration is 60 milliseconds, and the second time point is a time point at which receiving of the first message is acknowledged.

Optionally, the size level of the first duration (that is, duration required from the time point at which the wake-up module of the terminal device is turned on to the time point at which the wake-up module can monitor the wake-up signal) is the 10-millisecond (ms) magnitude order. For example, the first duration=N*10 ms, where N is a positive integer not greater than 9.

In the implementation, the second duration (60 milliseconds) and the second time point (the time point at which receiving of the first message is acknowledged) may be understood as two possible times at which the existing terminal device enters the idle state or the inactive state after receiving the RRC release message shown in FIG. 2. The terminal device usually enters the idle state, the inactive state, or the low power consumption state at an earlier time point (that is, the first time point). In the solution of this application, if the size level of the first duration (that is, the on duration of the wake-up module of the terminal device) is the 10-ms magnitude order, the terminal device may determine, based on the first duration, the time point of entering the idle state, the inactive state, or the low power consumption state. In other words, after the wake-up module of the terminal device is completely turned on, the terminal device enters the idle state, the inactive state, or the low power consumption state, and does not enter the idle state, the inactive state, or the low power consumption state based on time set in the existing solution, to ensure that the terminal device receives the wake-up signal after the wake-up module is completely turned on.

It should be noted that step S502B and step S503B may be performed at the same time, or may not be performed at the same time. Specifically, step S502B and step S503B are performed based on an actual situation or requirement. An execution sequence of the two steps is not specifically limited in this application.

S504B: The terminal device monitors the wake-up signal from the network device after entering the idle state or the inactive state.

In this implementation, it can be ensured that the terminal device can effectively monitor the wake-up signal from the network device after entering the idle state, the inactive state, or the low power consumption state.

In conclusion, according to the implementation solution shown in FIG. 5B, when the on duration of the wake-up module of the terminal device is short (in the 10-millisecond magnitude order), the terminal device enters the idle state, the inactive state, or the low power consumption state. In addition to two conditions in an existing protocol, the following condition needs to be met: The terminal device can enter the idle state, the inactive state, or the low power consumption state only after waiting for the first duration to end. The first duration is the on duration of the wake-up module of the terminal device. Therefore, it can be learned that in the implementation solution, the network device does not send an unnecessary message, and it can also be ensured that the terminal device can effectively monitor the notification from the network device.

In the solutions of this application, interaction between one terminal device and one network device is used as an example for description in the implementation solutions in FIG. 5A and FIG. 5B. In actual application, there may be more than one network device and terminal device, a plurality of network devices and a plurality of terminal devices may be included, and each network device may communicate with a plurality of terminal devices. Each terminal device may monitor or receive a notification from a corresponding network device by referring to the monitoring manner performed by the terminal device in FIG. 5A or FIG. 5B. Details are not described herein again.

The following further describes in detail an implementation solution provided in the embodiment of this application shown in FIG. 5A by using the following several specific embodiments.

Specific embodiment 1

The specific embodiment 1 mainly describes in detail the implementation 1 in the foregoing step S504A. In the specific embodiment 1, on duration of a wake-up module is in a 100-ms or more-ms magnitude order, or the on duration of the wake-up module is greater than 60 ms. Steps of the specific embodiment 1 are as follows:

Step 1: A terminal device receives an RRC release message from a network device, and enters an idle state or an inactive state.

When performing step 1, the terminal device may enter the idle state or the inactive state at an earlier one of a time point of acknowledgement (acknowledgement, ACK) information used by a lower layer (for example, a physical layer or a MAC layer) of the terminal device to indicate that receiving of the RRC release message is successfully acknowledged and a time point at which 60 ms elapse after the terminal device receives the RRC release message.

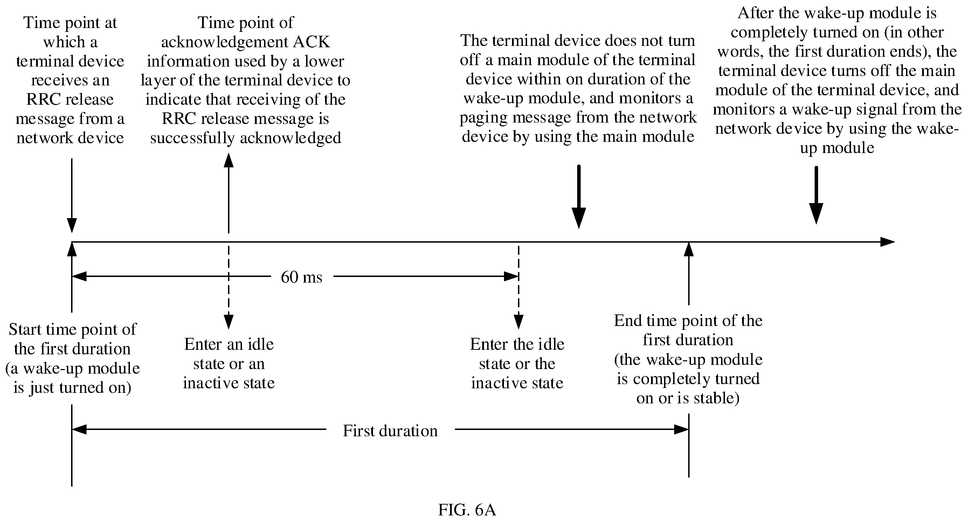

For example, as shown in FIG. 6A, the time point of acknowledgement ACK information used by the lower layer of the terminal device to indicate that receiving of the RRC release message is successfully acknowledged is earlier than the time point at which 60 ms elapse after the terminal device receives the RRC release message. Therefore, the terminal device may enter the idle state or the inactive state at the time point of acknowledgement ACK information used by the lower layer of the terminal device to indicate that receiving of the RRC release message is successfully acknowledged.

Step 2: The terminal device does not turn off a main module of the terminal device within the on duration (equivalent to the foregoing first duration) of the wake-up module, and monitors a paging message from the network device by using the main module.

A start time point of the first duration may be one of the following four items: (1) a time point at which a first message is received; (2) a time point at which receiving of the first message is acknowledged, for example, a time point at which the terminal device receives an indication of the lower layer (for example, the physical layer or the MAC layer) of the terminal device, where the indication indicates that receiving of the first message is acknowledged; (3) a time point at which the first message is successfully decoded; or

(4) a time point at which third duration elapses after the first message is received, where optionally, the third duration may be 10 milliseconds, 16 milliseconds, or 60 milliseconds.

FIG. 6A shows that the start time point of the first duration is the time point at which the first message is received. If a time point at which the lower layer (for example, the physical layer or the MAC layer) of the terminal device indicates that receiving of the RRC release message is successfully acknowledged is earlier than 60 ms, the terminal device enters the idle state or the inactive state at the time point at which the lower layer of the terminal device indicates that receiving of the RRC release message is successfully acknowledged. Because an end time point of the first duration is later than a time point at which the terminal device enters the idle state or the inactive state, after entering the idle state or the inactive state and before the end time point of the first duration, the terminal device does not turn off the main module of the terminal device, to monitor the paging message from the network device by using the main module.

Alternatively, in the specific embodiment 1, if the time point at which the lower layer of the terminal device indicates that receiving of the RRC release message is successfully acknowledged is later than 60 ms, the terminal device enters the idle state or the inactive state at the time point at which 60 ms elapse after the terminal device receives the RRC release message.

Step 3: After the wake-up module is completely turned on (in other words, the first duration ends), the terminal device turns off the main module of the terminal device, and monitors a wake-up signal from the network device by using the wake-up module.

As shown in FIG. 6A, after the end time point of the first duration (in this case, the wake-up module of the terminal device is completely turned on), the terminal device turns off the main module of the terminal device, and monitors the wake-up signal from the network device by using the wake-up module of the terminal device.

Optionally, in the specific embodiment 1, the terminal device reports the first duration to the network device. If the first duration includes a part of a plurality of monitoring occasions in one PO on which the terminal device needs to be paged, the terminal device may turn off the main module after the terminal device completes monitoring of a remaining monitoring occasion of the PO. This can avoid a case in which the terminal device misses detecting a notification of the network device because the terminal device performs receiving in less remaining monitoring time of a same PO.

Optionally, when the first duration (that is, the on duration of the wake-up module of the terminal device) is less than a specific threshold, the network device may not need to send the first duration to a core network device. A reason is that the terminal device is always located in this cell with a high probability in the first duration (that is, the on duration of the wake-up module), and does not move to another cell. If the core network device pages the terminal device in the first duration, another network device does not send information for paging the terminal device. Therefore, the another network device does not need to know the first duration.

According to the specific embodiment 1, it can be learned that within the on duration of the wake-up module (the first duration), the terminal device does not turn off the main module, monitors the paging message, and does not receive the wake-up signal. After the first duration ends, the terminal device turns off the main module, and then starts to receive the wake-up signal. In this way, the network device can still page the terminal device within the on duration of the wake-up module. In addition, in this embodiment, time at which the terminal device enters the idle state or the inactive state is not changed.

Specific embodiment 2

The specific embodiment 2 mainly describes in detail the implementation 2 in the foregoing step S504A. In the specific embodiment 2, on duration of a wake-up module is in a 10-ms magnitude order. Steps of the specific embodiment 2 are as follows:

Step 1: A terminal device receives an RRC release message from a network device, and enters an idle state or an inactive state.

When performing step 1, the terminal device may enter the idle state or the inactive state at an earlier one of a time point of acknowledgement ACK information used by a lower layer (for example, a physical layer or a MAC layer) of the terminal device to indicate that the RRC release message is successfully received and a time point at which 60 ms elapse after the terminal device receives the RRC release message.

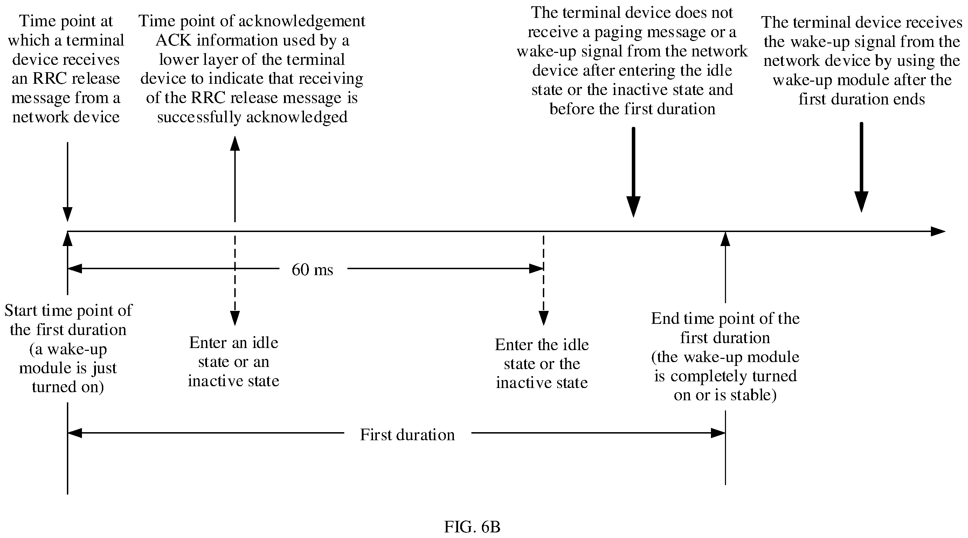

For example, as shown in FIG. 6B, the time point of the acknowledgement ACK information used by the lower layer of the terminal device to indicate that the RRC release message is successfully received is earlier than the time point at which 60 ms elapse after the terminal device receives the RRC release message. Therefore, the terminal device may enter the idle state or the inactive state at the time point of the acknowledgement ACK information used by the lower layer of the terminal device to indicate that the RRC release message is successfully received.

Step 2: The terminal device does not receive a paging message or a wake-up signal from the network device after entering the idle state or the inactive state and before first duration.

To be specific, after the terminal device enters the idle state or the inactive state and before the first duration, the terminal device turns off a main module, and does not receive the wake-up signal or the paging message from the network device. In addition, even if the network device needs to page the terminal device in the first duration, the network device does not send the paging message or the wake-up signal to the terminal device, to reduce useless overheads of the network device.

Step 3: The terminal device receives the wake-up signal from the network device by using the wake-up module after the first duration ends.

The network device may send the wake-up signal to the terminal device after the first duration ends, and the terminal device receives the wake-up signal from the network device by using the wake-up module after the first duration ends.

According to the specific embodiment 2, when the first duration is not long, the terminal device turns off the main module in the first duration, and does not monitor the paging message or the wake-up signal from the network device (and the network device does not send the paging message or the wake-up signal). After the first duration ends, the terminal device starts to monitor or receive the wake-up signal from the network device (and the network device also sends the wake-up signal after the first duration ends). In this way, a protocol can be simplified at a low delay cost.

The following further describes in detail another implementation solution provided in the embodiment of this application shown in FIG. 5B by using the following specific embodiment.

Specific embodiment 3

In the specific embodiment 3, on duration of a wake-up module is in a 10-ms magnitude order. Steps of the specific embodiment 3 are as follows:

Step 1: A terminal device receives an RRC release message from a network device.
Step 2: The terminal device enters an idle state or an inactive state after first duration ends.

In step 2, there may be a plurality of cases for an end time point of the first duration. Details are described in the following examples.

In the following Example 1, Example 2, and Example 3, a time point of acknowledgement ACK information used by a lower layer of the terminal device to indicate that the RRC release message is successfully received is earlier than an end time point at which 60 ms elapse after the terminal device receives the RRC release message.

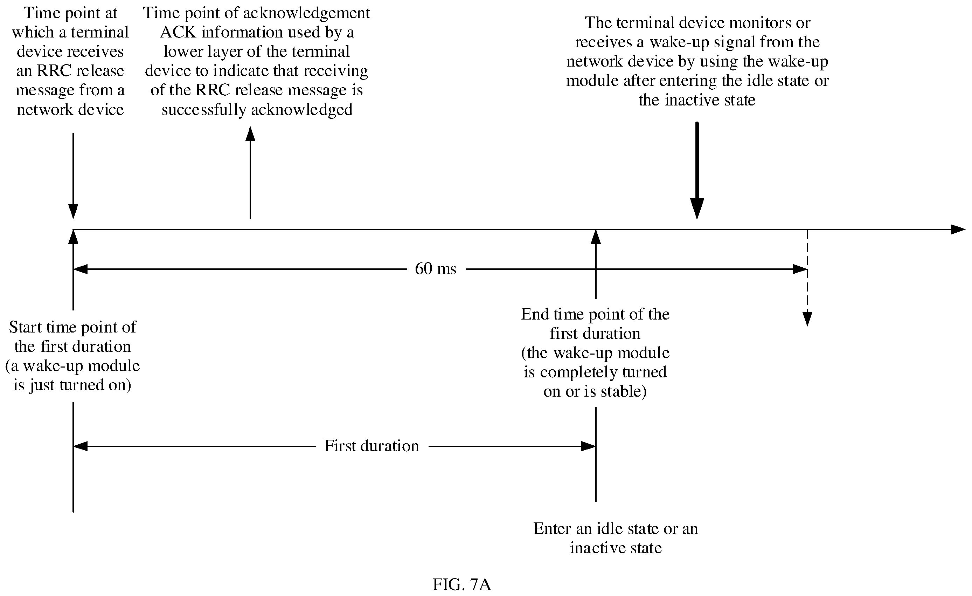

Example 1: As shown in FIG. 7A, a start time point of the first duration is a time point at which the terminal device receives the RRC release message from the network device, and the end time point of the first duration is later than the time point of the acknowledgement ACK information used by the lower layer of the terminal device to indicate that the RRC release message is successfully received, but the end time point of the first duration is earlier than the end time point at which 60 ms elapse after the terminal device receives the RRC release message. The terminal device enters the idle state or the inactive state at the end time point of the first duration.

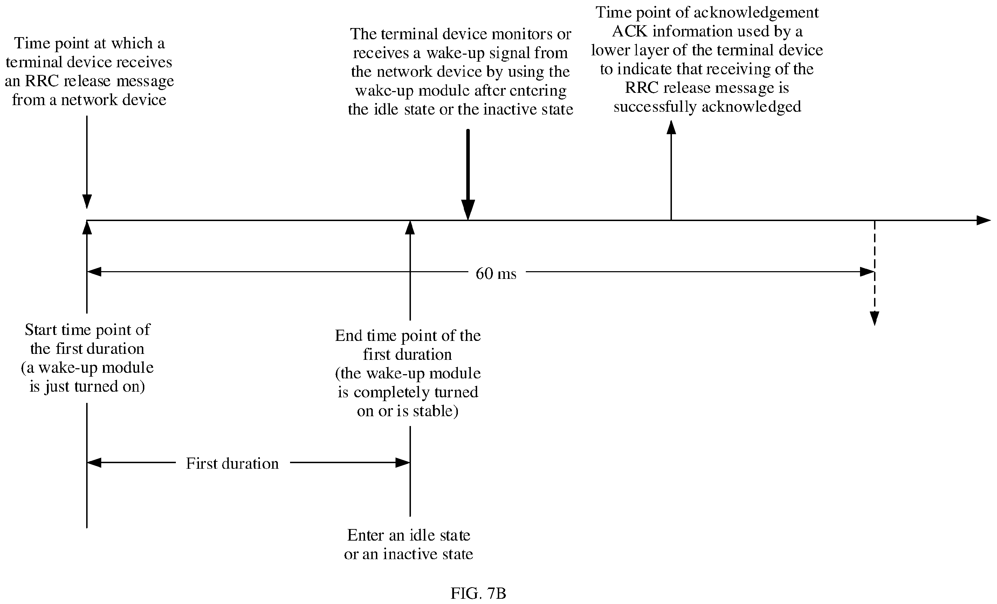

Example 2: As shown in FIG. 7B, a start time point of the first duration is a time point at which the terminal device receives the RRC release message from the network device, and the end time point of the first duration is earlier than the time point of the acknowledgement ACK information used by the lower layer of the terminal device to indicate that the RRC release message is successfully received, and is also earlier than the end time point at which 60 ms elapse after the terminal device receives the RRC release message. The terminal device enters the idle state or the inactive state at the time point of the acknowledgement ACK information used by the lower layer of the terminal device to indicate that the RRC release message is successfully received.

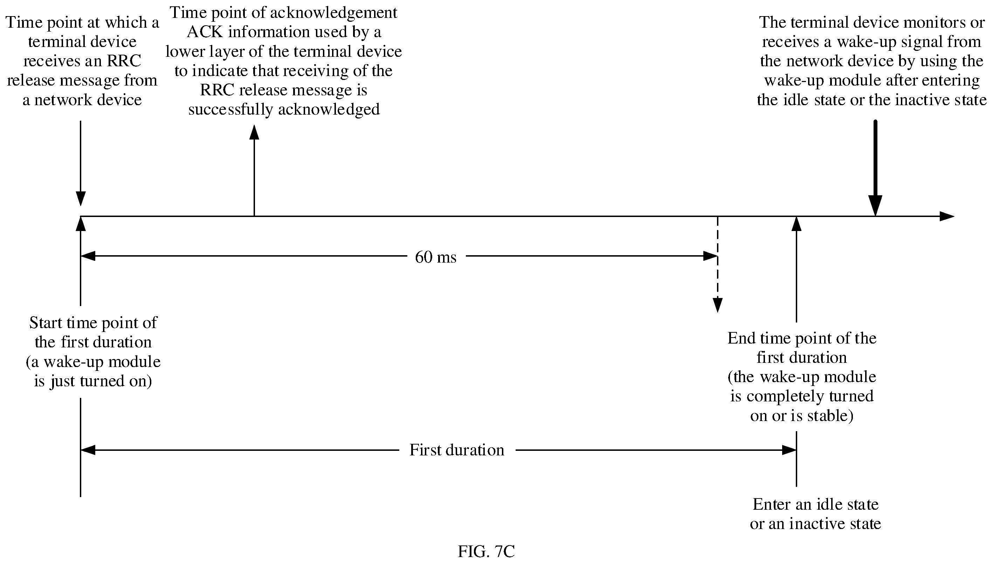

Example 3: As shown in FIG. 7C, a start time point of the first duration is a time point at which the terminal device receives the RRC release message from the network device, and the end time point of the first duration is later than the time point of the acknowledgement ACK information used by the lower layer of the terminal device to indicate that the RRC release message is successfully received, and is also later than the end time point at which 60 ms elapse after the terminal device receives the RRC release message. The terminal device enters the idle state or the inactive state at the end time point of the first duration.

In the following Example 4, Example 5, and Example 6, the time point of the acknowledgement ACK information used by the lower layer of the terminal device to indicate that the RRC release message is successfully received is later than the end time point at which 60 ms elapse after the terminal device receives the RRC release message.

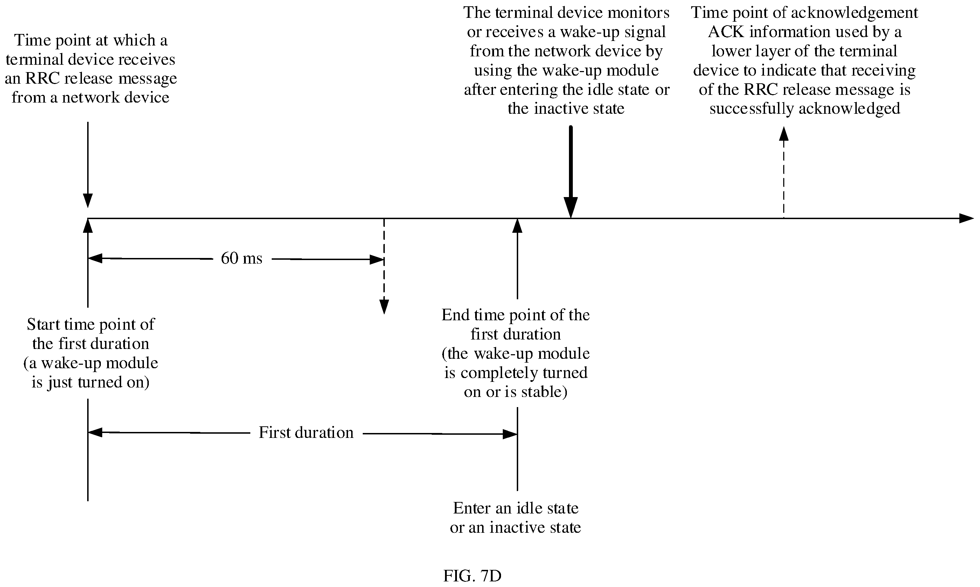

Example 4: As shown in FIG. 7D, a start time point of the first duration is a time point at which the terminal device receives the RRC release message from the network device, and the end time point of the first duration is earlier than the end time point at which 60 ms elapse after the terminal device receives the RRC release message, but is later than the time point of the acknowledgement ACK information used by the lower layer of the terminal device to indicate that the RRC release message is successfully received. The terminal device enters the idle state or the inactive state at the end time point of the first duration.

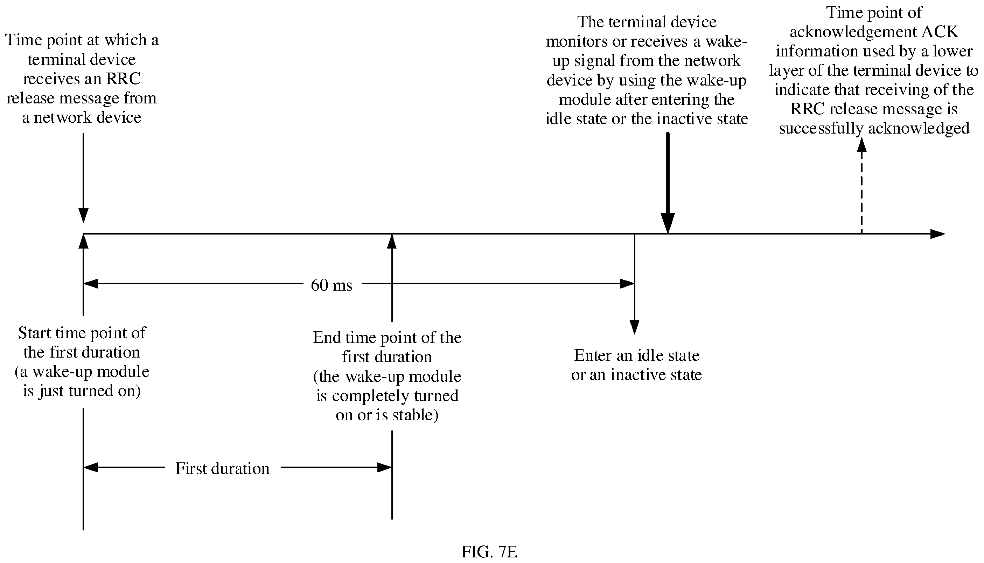

Example 5: As shown in FIG. 7E, a start time point of the first duration is a time point at which the terminal device receives the RRC release message from the network device, and the end time point of the first duration is earlier than the end time point at which 60 ms elapse after the terminal device receives the RRC release message, and is also earlier than the time point of the acknowledgement ACK information used by the lower layer of the terminal device to indicate that the RRC release message is successfully received. The terminal device enters the idle state or the inactive state at the end time point at which 60 ms elapse after the terminal device receives the RRC release message.

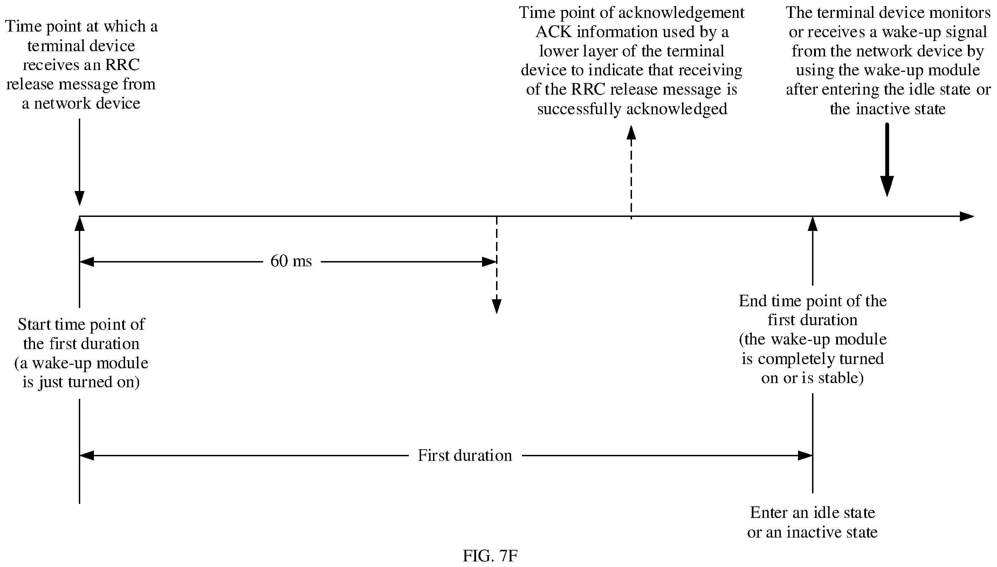

Example 6: As shown in FIG. 7F, a start time point of the first duration is a time point at which the terminal device receives the RRC release message from the network device, and the end time point of the first duration is later than the end time point at which 60 ms elapse after the terminal device receives the RRC release message, and is also later than the time point of the acknowledgement ACK information used by the lower layer of the terminal device to indicate that the RRC release message is successfully received. The terminal device enters the idle state or the inactive state at the end time point of the first duration.

Step 3: The terminal device monitors or receives a wake-up signal from the network device by using the wake-up module after entering the idle state or the inactive state.

In the specific embodiment 3, when the on duration of the wake-up module of the terminal device is short (in a 10-millisecond magnitude order), the terminal device may not enter the idle state or the inactive state before the first duration ends. When the terminal device does not enter the idle state or the inactive state (in other words, before the wake-up module of the terminal device is not completely turned on), the terminal device does not receive a paging message or the wake-up signal from the network device, and the network device does not send the paging message or the wake-up signal to the terminal device. After entering the idle state or the inactive state, the terminal device monitors (or receives) the wake-up signal from the network device by using the wake-up module. In addition, the network device also sends the wake-up signal to the terminal device, to ensure that the terminal device in the idle state or the inactive state can effectively monitor or receive a notification from the network device.

Optionally, in this embodiment of this application, the wake-up signal may further carry early data transmission (early data transmission, EDT) indication information of the terminal device. Optionally, the indication information indicates the terminal device to receive downlink data transmission of the network device in a random process. Optionally, a size of the downlink data transmission is small, for example, less than one transport block. The terminal device may include an EDT data request message in a random access process. Then, after receiving the request message from the terminal device, the network device may send, to the terminal device, downlink data that needs to be sent to the terminal device. In this way, when the network device needs to send small data to the terminal device, the network device may send the small data to the terminal device in the random access process or without entering an RRC connected state, to reduce a transmission delay and energy consumption of the terminal device.

After entering the idle state, the inactive state, or a low power consumption state, the terminal device may send a second message to the network device, where the second message is used to request the network device to send the paging message or the wake-up signal, to notify the terminal device. In other words, the terminal device notifies the network device whether the terminal device expects to monitor the paging message or the wake-up signal. The terminal device may send the second message in the random access process. In this way, the terminal device may send request information without entering the RRC connected state, and the second message may carry an ID of the terminal device. Optionally, the second message may further carry an ID of a network device existing when the terminal device enters the idle state (or the inactive state or the low power consumption state) from the connected state last time. Therefore, a network device on which the terminal device performs random access obtains more information about the terminal device. Optionally, the terminal device may send the second message after receiving a random access response message. Optionally, after receiving the second message, the network device may further send a third message, where the third message indicates whether the network device is to notify the terminal device by using the paging message or the wake-up signal. Optionally, if the network device changes a manner of notifying the terminal device, change effectiveness time may be carried in the third message, or may be predefined in a protocol or indicated by a system message. Optionally, the terminal device may further include channel quality of the terminal device, or a receiving status or receiving quality of a received wake-up signal in the second message, so that the network device determines a notification manner. Optionally, the terminal device may perform random access by using a sequence that is configured by the network device and that is used to change the notification manner or report the channel quality, so that the network device determines an objective of performing random access by the terminal device.

In this way, when quality of the wake-up signal is poor, the terminal device may notify the network device to change to notify, by using the paging message, whether to wake up the terminal device, to avoid a case in which the terminal device cannot receive notification information of the network device. When signal quality is good, the terminal device may notify the network device to change to notify, by using the wake-up signal, whether to wake up the terminal device, to reduce energy consumption of the terminal device.

Optionally, the terminal device may send the second message in the RRC connected state. The second message is used to request whether the network device sends the paging message or the wake-up signal to notify the terminal device after the terminal device enters the idle state, the inactive state, or the low power consumption state. In this way, the terminal device and the network device that do not support modification of the notification manner in the random access process may also modify the notification manner. Optionally, the network device may indicate, by using the system message or the wake-up signal, whether the terminal device is supported in sending the second message in the random access process.

In the foregoing embodiments provided in this application, the methods provided in embodiments of this application are described from a perspective of interaction between devices. To implement functions in the methods provided in the foregoing embodiments of this application, the network device or the terminal device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

Division into modules in embodiments of this application is an example, and is merely logical function division. During actual implementation, another division manner may be used. In addition, functional modules in embodiments of this application may be integrated into one processor, or may exist alone physically, or two or more modules may be integrated into one module. The integrated module may be implemented in a form of hardware, or may be implemented in a form of a software functional module.

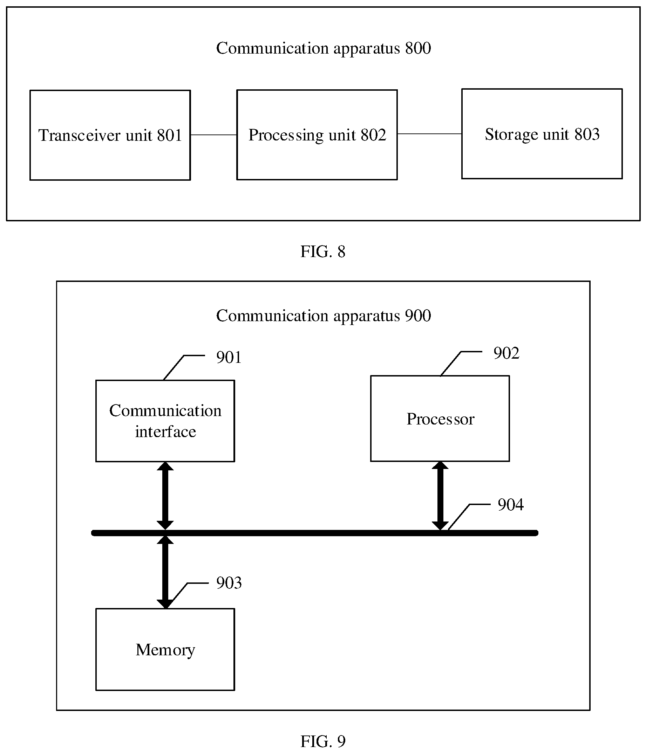

Same as the foregoing concept, as shown in FIG. 8, an embodiment of this application further provides a communication apparatus 800, configured to implement a function of the network device or the terminal device in the foregoing methods. For example, the apparatus may be a software module or a chip system. In this embodiment of this application, the chip system may include a chip, or may include a chip and another discrete component. The communication apparatus 800 may include a transceiver unit 801 and a processing unit 802. Optionally, the communication apparatus 800 further includes a storage unit 803. The storage unit 803 may be configured to store program instructions and data that are necessary for the communication apparatus 800. The transceiver unit 801, the processing unit 802, and the storage unit 803 (optional) may be connected to each other.

In this embodiment of this application, the transceiver unit may also be referred to as a communication unit, and may include a sending unit and/or a receiving unit, which are respectively configured to perform sending and receiving steps of the network device or the terminal device in the foregoing method embodiments.

The following describes in detail communication apparatuses provided in embodiments of this application with reference to FIG. 8 and FIG. 9. It should be understood that descriptions of apparatus embodiments correspond to the descriptions of the method embodiments. Therefore, for content that is not described in detail, refer to the method embodiments. For brevity, details are not described herein again.

The transceiver unit may also be referred to as a transceiver, a transceiver machine, a transceiver apparatus, or the like. The processing unit may also be referred to as a processor, a processing board, a processing module, a processing apparatus, or the like. Optionally, a component configured to implement a receiving function in the transceiver unit 801 may be considered as a receiving unit, and a component configured to implement a sending function in the transceiver unit 801 may be considered as a sending unit. In other words, the transceiver unit 801 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

When the communication apparatus 800 performs the function of the terminal device in the procedure shown in FIG. 5A in the foregoing embodiments,

the transceiver unit 801 is configured to receive a first message from a network device, where the first message indicates the terminal device to enter an idle state or an inactive state. The processing unit may be configured to enter the idle state or the inactive state.

The transceiver unit 801 is further configured to monitor a wake-up signal from the network device after waiting for first duration, where an end time point of the first duration is later than a time point of entering the idle state or the inactive state.

When the communication apparatus 800 performs the function of the terminal device in the procedure shown in FIG. 5B in the foregoing embodiments,

the transceiver unit 801 is configured to receive a first message from a network device, where the first message indicates the terminal device to enter an idle state or an inactive state.

The processing unit 802 is configured to enter the idle state or the inactive state based on first duration, where the first duration is on duration of a wake-up module of the terminal device.

When the communication apparatus 800 performs the function of the network device in the procedure shown in FIG. 5A or FIG. 5B in the foregoing embodiments,

the transceiver unit 801 is configured to send a first message to a terminal device, where the first message indicates the terminal device to enter an idle state or an inactive state.

The processing unit 802 is configured to send a paging message and/or a wake-up signal to the terminal device based on first duration, where the first duration is on duration of a wake-up module of the terminal device.

The foregoing is merely an example. The processing unit 802 and the transceiver unit 801 may further perform other functions. For more detailed descriptions, refer to the related descriptions in the method embodiments shown in FIG. 5A and FIG. 5B. Details are not described herein again.

FIG. 9 shows a communication apparatus 900 according to an embodiment of this application. The communication apparatus shown in FIG. 9 may be an implementation of a hardware circuit of the communication apparatus shown in FIG. 8. The communication apparatus is applicable to the foregoing flowcharts, and performs a function of the terminal device or the network device in the foregoing method embodiments. For ease of description, FIG. 9 shows only main components of the communication apparatus.

As shown in FIG. 9, the communication apparatus 900 includes a communication interface 901 and a processor 902. The communication interface 901 and the processor 902 are coupled to each other. It may be understood that the communication interface 901 may be a transceiver or an input/output interface, or may be an interface circuit such as a transceiver circuit. Optionally, the communication apparatus 900 may further include a memory 903, configured to store instructions to be executed by the processor 902, store input data required for running the instructions by the processor 902, or store data generated after the processor 902 runs the instructions.

When the communication apparatus 900 is configured to implement the methods shown in FIG. 5A and FIG. 5B, the processor 902 is configured to implement the function of the processing unit 802, and the communication interface 901 is configured to implement the function of the transceiver unit 801.

A specific connection medium between the communication interface 901, the processor 902, and the memory 903 is not limited in this embodiment of this application. In this embodiment of this application, the memory 903, the processor 902, and the communication interface 901 are connected through a bus 904 in FIG. 9. The bus is represented by using a thick line in FIG. 9. A manner of a connection between other components is merely an example for description, and is not limited thereto. The bus may be classified into an address bus, a data bus, a control bus, and the like. For ease of representation, only one thick line is for representing the bus in FIG. 9, but this does not mean that there is only one bus or only one type of bus.

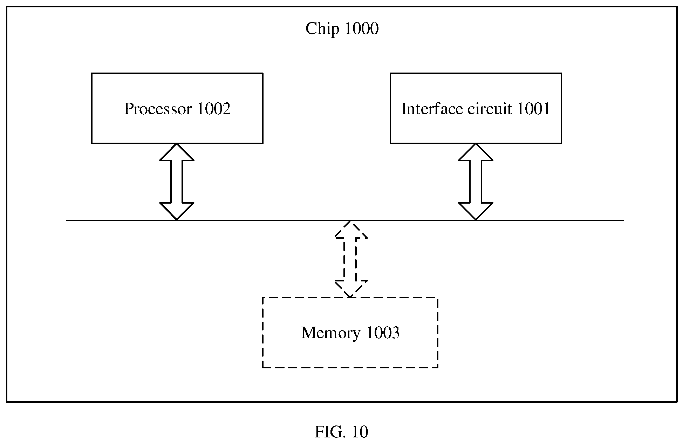

When the foregoing communication apparatus is a chip, FIG. 10 is a simplified diagram of a structure of a chip. The chip 1000 includes an interface circuit 1001 and one or more processors 1002. Optionally, the chip 1000 may further include a bus. Herein,

the processor 1002 may be an integrated circuit chip, having a signal processing capability. In an implementation process, steps in the foregoing communication method may be implemented by using a hardware integrated logic circuit in the processor 1002, or by using instructions in a form of software. The processor 1002 may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods and steps that are disclosed in embodiments of this application. The general-purpose processor may be a microprocessor, or the processor may be any conventional processor or the like.

The interface circuit 1001 may be configured to send or receive data, instructions, or information. The processor 1002 may perform processing by using the data, the instructions, or other information received by the interface circuit 1001, and may send processed information through the interface circuit 1001.

Optionally, the chip further includes a memory 1003. The memory 1003 may include a read-only memory and a random access memory, and provide operation instructions and data for the processor. A part of the memory 1003 may further include a non-volatile random access memory (NVRAM).

Optionally, the memory stores an executable software module or a data structure, and the processor may perform a corresponding operation by invoking the operation instructions (where the operation instructions may be stored in an operating system) stored in the memory.

Optionally, the chip may be used in the terminal device or the network device in embodiments of this application. Optionally, the interface circuit 1001 may be configured to output an execution result of the processor 1002. For the communication method provided in one or more embodiments of this application, refer to the foregoing embodiments. Details are not described herein again.

It should be noted that functions corresponding to the interface circuit 1001 and the processor 1002 may be implemented by using a hardware design, or may be implemented by using a software design, or may be implemented by using a combination of software and hardware. This is not limited herein.

An embodiment of this application further provides a computer-readable storage medium. The computer-readable storage medium stores computer instructions used to implement the method performed by a first communication apparatus in the foregoing method embodiments, and/or the computer-readable storage medium stores computer instructions used to implement the method performed by the terminal device or the network device in the foregoing method embodiments.

For example, when a computer program is executed by a computer, the computer is enabled to implement the method performed by the terminal device or the network device in the foregoing method embodiments.

An embodiment of this application further provides a computer program product including instructions. When the instructions are executed by a computer, the computer is enabled to implement the method performed by the terminal device in the foregoing method embodiments, and/or when the instructions are executed by a computer, the computer is enabled to implement the method performed by the network device in the foregoing method embodiments.

An embodiment of this application further provides a chip apparatus including a processor. The processor is configured to invoke a computer program or computer instructions stored in a memory, so that the processor performs the communication methods in the embodiments shown in FIG. 5A and FIG. 5B.

In a possible implementation, an input of the chip apparatus corresponds to the receiving operation in the embodiments shown in FIG. 5A and FIG. 5B, and an output of the chip apparatus corresponds to the sending operation in the embodiments shown in FIG. 5A and FIG. 5B.

Optionally, the processor is coupled to the memory through an interface.

Optionally, the chip apparatus further includes the memory. The memory stores the computer program or the computer instructions.

The processor mentioned in any of the foregoing descriptions may be a general-purpose central processing unit, a microprocessor, an application-specific integrated circuit (application-specific integrated circuit, ASIC), or one or more of integrated circuits configured to control program execution of the communication methods in the embodiments shown in FIG. 5A and FIG. 5B. The memory mentioned in any of the foregoing descriptions may be a read-only memory (read-only memory, ROM), another type of static storage device that can store static information and instructions, a random access memory (random access memory, RAM), or the like.

It should be noted that for ease and brevity of description, for explanations and beneficial effect of related content of any one of the communication apparatuses provided above, reference may be made to the corresponding communication method embodiments provided above. Details are not described herein again.

In this application, a hardware layer, an operating system layer running above the hardware layer, and an application layer running above the operating system layer may be further included between communication apparatuses. The hardware layer may include hardware such as a central processing unit (central processing unit, CPU), a memory management module (memory management unit, MMU), and a memory (also referred to as a main memory). An operating system at the operating system layer may be any one or more computer operating systems that implement service processing through a process (process), for example, a Linux operating system, a Unix operating system, an Android operating system, an iOS operating system, or a Windows operating system. The application layer may include applications such as a browser, an address book, word processing software, and instant messaging software.

In embodiments of this application, the module division is an example, and is merely logical function division and may be another division manner during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module.

Based on the descriptions of the foregoing implementations, a person skilled in the art may clearly understand that embodiments of this application may be implemented by hardware, firmware or a combination thereof. When embodiments are implemented by software, the foregoing functions may be stored in a computer-readable medium or transmitted as one or more instructions or code in the computer-readable medium. The computer-readable medium includes a computer storage medium and a communication medium, where the communication medium includes any medium that enables a computer program to be transmitted from one place to another. The storage medium may be any available medium accessible to a computer. Examples of the computer-readable medium include but are not limited to: a RAM, a ROM, an electrically erasable programmable read only memory (electrically erasable programmable read only memory, EEPROM), a compact disc read-only memory (compact disc read-only memory, CD-ROM) or another optical disc storage, a disk storage medium or another disk storage device, or any other medium that can be used to carry or store expected program code in an instruction or data structure form and can be accessed by a computer. In addition, any connection may be properly defined as a computer-readable medium. For example, if software is transmitted from a website, a server, or another remote source by using a coaxial cable, an optical fiber and optical cable, a twisted pair, a digital subscriber line (digital subscriber line, DSL), or wireless technologies such as infrared, radio, and microwave, the coaxial cable, the optical fiber and optical cable, the twisted pair, the DSL, or the wireless technologies such as infrared, radio, and microwave are included in a definition of a medium to which the coaxial cable, the optical fiber and optical cable, the twisted pair, the DSL, or the wireless technologies such as the infrared ray, the radio, and the microwave belong. For example, a disk (disk) and a disc (disc) used in embodiments of this application include a compact disc (compact disc, CD), a laser disc, an optical disc, a digital video disc (digital video disc, DVD), a floppy disk and a Blu-ray disc. The disk generally copies data by a magnetic means, and the disc copies data optically by a laser means. The foregoing combination should also be included in the protection scope of the computer-readable medium.

In summary, the foregoing descriptions are merely embodiments of this application, and are not intended to limit the protection scope of this application. Any modification, equivalent substitution, improvement, and the like made based on the disclosure of this application shall fall within the protection scope of this application.

**Claims**

1. A communication method, comprising:

   receiving a first message from a network device, wherein the first message indicates a terminal device to enter an idle state or an inactive state;
   entering the idle state or the inactive state; and
   monitoring a wake-up signal from the network device after waiting for first duration, wherein an end time point of the first duration is later than a time point of entering the idle state or the inactive state.

2. The method according to claim 1, wherein the first duration is on duration of a wake-up module of the terminal device.

3. The method according to claim 1 or 2, wherein the method further comprises:
   monitoring a paging message from the network device after entering the idle state or the inactive state and before the first duration ends.

4. The method according to claim 3, wherein a size level of the first duration is a 100-millisecond magnitude order.

5. The method according to claim 1 or 2, wherein the method further comprises:
   skipping monitoring a paging message from the network device after entering the idle state or the inactive state and before the first duration ends.

6. The method according to claim 5, wherein a size level of the first duration is a 10-millisecond magnitude order.

7. The method according to any one of claims 1 to 6, wherein the method further comprises:

skipping monitoring the wake-up signal from the network device after entering the idle state or the inactive state and before the first duration ends; and
skipping monitoring the paging message from the network device after the first duration ends.

8. The method according to any one of claims 1 to 7, wherein a start time point of the first duration is one of the following:

a time point at which the first message is received;
a time point at which receiving of the first message is acknowledged;
a time point at which the first message is successfully decoded; or
a time point at which 10 milliseconds, 16 milliseconds, or 60 milliseconds elapse after the first message is received.

9. A communication method, comprising:

receiving a first message from a network device, wherein the first message indicates a terminal device to enter an idle state or an inactive state; and
entering the idle state or the inactive state based on first duration, wherein the first duration is on duration of a wake-up module of the terminal device.

10. The method according to claim 9, wherein the entering the idle state or the inactive state based on the first duration comprises:
entering the idle state or the inactive state at a later one of an end time point of the first duration and a first time point, wherein the first time point is an earlier one of an end time point of second duration and a second time point, the second duration is 60 milliseconds, and the second time point is a time point at which receiving of the first message is acknowledged.

11. The method according to claim 9 or 10, wherein the method further comprises:
monitoring a wake-up signal from the network device after entering the idle state or the inactive state.

12. The method according to any one of claims 9 to 11, wherein a size level of the first duration is a 10-ms magnitude order.

13. The method according to any one of claims 9 to 12, wherein the method further comprises:
determining to monitor the wake-up signal from the network device in a second manner, wherein the second manner is to enter the idle state or the inactive state based on the first duration and monitor the wake-up signal from the network device after entering the idle state or the inactive state.

14. A communication method, comprising:

sending a first message to a terminal device, wherein the first message indicates the terminal device to enter an idle state or an inactive state; and
sending a paging message and/or a wake-up signal to the terminal device based on first duration, wherein the first duration is on duration of a wake-up module of the terminal device.

15. The method according to claim 14, wherein the sending a paging message and/or a wake-up signal to the terminal device based on first duration comprises:

sending the paging message to the terminal device after determining that the terminal device enters the idle state or the inactive state, and before the first duration ends; and
sending the wake-up signal to the terminal device after the first duration ends.

16. The method according to claim 15, wherein a size level of the first duration is a 100-millisecond magnitude order.

17. The method according to claim 14, wherein the sending a paging message and/or a wake-up signal to the terminal device based on first duration comprises:
after sending the first message to the terminal device, skipping sending the paging message and the wake-up signal to the terminal device before the first duration ends, and sending the wake-up signal to the terminal device after the first duration ends.

18. The method according to claim 17, wherein a size level of the first duration is a 10-millisecond magnitude order.

19. The method according to claim 14, wherein the method further comprises:
sending first indication information to the terminal device, wherein the first indication information indicates a manner in which the terminal device monitors the wake-up signal from a network device, and the manner is determined by the network device based on the first duration.

20. The method according to claim 19, wherein the first duration is from the terminal device, or the first duration is predefined.

21. The method according to any one of claims 14 to 20, wherein the first duration comprises any one or more of the following:
a time period from a time point at which the wake-up module loads a configuration parameter of the wake-up module to a time point at which the wake-up module normally receives the wake-up signal, or a time period in which the terminal device decodes a signal comprising the configuration parameter of the wake-up module.

22. A communication apparatus, comprising a unit or a module configured to perform the method according to any one of claims 1 to 8, comprising a unit or a module configured to perform the method according to any one of claims 9 to 13, or comprising a unit or a module configured to perform the method according to any one of claims 14 to 21.

23. A communication apparatus, wherein the communication apparatus comprises a processor and a storage medium, the storage medium stores instructions, and when the instructions are run by the processor, the method according to any one of claims 1 to 8 is implemented, the method according to any one of claims 9 to 13 is implemented, or the method according to any one of claims 14 to 21 is implemented.

24. A computer-readable storage medium, wherein the computer-readable storage medium comprises instructions, and when the instructions are run by a processor, the method according to any one of claims 1 to 8 is implemented, the method according to any one of claims 9 to 13 is implemented, or the method according to any one of claims 14 to 21 is implemented.

25. A computer program product, wherein the computer program product comprises instructions, and when the instructions are run by a processor, the method according to any one of claims 1 to 8 is implemented, the method according to any one of claims 9 to 13 is implemented, or the method according to any one of claims 14 to 21 is implemented.

FIG. 1

Time point at
which a terminal
device receives an
RRC release
message from a
network device

Time point of acknowledgement
ACK information used by a
lower layer of the terminal
device to indicate that receiving
of the RRC release message is
successfully acknowledged

60 ms

Idle state or inactive
state (RRC-IDLE)

Idle state or inactive
state (RRC-IDLE)

FIG. 2

T

| 0 | 1 | 2 | 3 | 4 | 5 | 6 | 7 | | 30 | 31 | 32 | 33 |

PF                    PF                              PF

| 0 | | 1 | |

po          po

| 0 | | 1 | |

po          po

FIG. 3

Off or deep sleep

Main receiver

Wake-up
signal
(OFF) → Wake-up receiver

Terminal device

(a)

On

Main receiver

Wake up
(Trigger)

Wake-up
signal
(ON) → Wake-up receiver

Terminal device

(b)

FIG. 4

Network device | Terminal device

S501A: First message, where the first message indicates the
terminal device to enter an idle state or an inactive state

S502A: Enter the idle state or
the inactive state

S503A: Send a paging message and/or a wake-up signal
to the terminal device based on first duration, where the
first duration is on duration of a wake-up module of the
terminal device

S504A: Monitor the wake-up
signal from the network device
after waiting for the first duration.
Optionally, an end time point of the
first duration is later than a time
point of entering the idle state or
the inactive state

FIG. 5A

| Network device | | Terminal device |
|---|---|---|

S501B: First message, where the first message indicates the terminal device to enter an idle state or an inactive state

S502B: Send a paging message and/or a wake-up signal to the terminal device based on first duration, where the first duration is on duration of a wake-up module of the terminal device

S503B: Enter the idle state or the inactive state based on the first duration, where the first duration is the on duration of the wake-up module of the terminal device

S504B: Monitor the wake-up signal from the network device after entering the idle state or the inactive state

FIG. 5B

Time point at which a terminal device receives an RRC release message from a network device

Time point of acknowledgement ACK information used by a lower layer of the terminal device to indicate that receiving of the RRC release message is successfully acknowledged

The terminal device does not turn off a main module of the terminal device within on duration of the wake-up module, and monitors a paging message from the network device by using the main module

After the wake-up module is completely turned on (in other words, the first duration ends), the terminal device turns off the main module of the terminal device, and monitors a wake-up signal from the network device by using the wake-up module

60 ms

Start time point of the first duration (a wake-up module is just turned on)

Enter an idle state or an inactive state

Enter the idle state or the inactive state

End time point of the first duration (the wake-up module is completely turned on or is stable)

First duration

FIG. 6A

EP 4 564 864 A1

Time point at which a terminal device receives an RRC release message from a network device

Time point of acknowledgement ACK information used by a lower layer of the terminal device to indicate that receiving of the RRC release message is successfully acknowledged

The terminal device does not receive a paging message or a wake-up signal from the network device after entering the idle state or the inactive state and before the first duration

The terminal device receives the wake-up signal from the network device by using the wake-up module after the first duration ends

60 ms

Start time point of the first duration (a wake-up module is just turned on)

Enter an idle state or an inactive state

Enter the idle state or the inactive state

End time point of the first duration (the wake-up module is completely turned on or is stable)

First duration

FIG. 6B

Time point at which a terminal device receives an RRC release message from a network device

Time point of acknowledgement ACK information used by a lower layer of the terminal device to indicate that receiving of the RRC release message is successfully acknowledged

The terminal device monitors or receives a wake-up signal from the network device by using the wake-up module after entering the idle state or the inactive state

60 ms

Start time point of the first duration (a wake-up module is just turned on)

End time point of the first duration (the wake-up module is completely turned on or is stable)

First duration

Enter an idle state or an inactive state

FIG. 7A

Time point at which a
terminal device receives
an RRC release message
from a network device

The terminal device monitors or
receives a wake-up signal from
the network device by using the
wake-up module after entering
the idle state or the inactive state

Time point of acknowledgement
ACK information used by a
lower layer of the terminal device
to indicate that receiving of the
RRC release message is
successfully acknowledged

60 ms

Start time point of
the first duration
(a wake-up module
is just turned on)

End time point of the
first duration
(the wake-up module
is completely turned
on or is stable)

First duration

Enter an idle state
or an inactive state

FIG. 7B

Time point at which a terminal device receives an RRC release message from a network device

Time point of acknowledgement ACK information used by a lower layer of the terminal device to indicate that receiving of the RRC release message is successfully acknowledged

The terminal device monitors or receives a wake-up signal from the network device by using the wake-up module after entering the idle state or the inactive state

60 ms

Start time point of the first duration (a wake-up module is just turned on)

End time point of the first duration (the wake-up module is completely turned on or is stable)

First duration

Enter an idle state or an inactive state

FIG. 7C

EP 4 564 864 A1

Time point at which a
terminal device receives
an RRC release message
from a network device

The terminal device monitors
or receives a wake-up signal
from the network device by
using the wake-up module
after entering the idle state or
the inactive state

Time point of acknowledgement
ACK information used by a
lower layer of the terminal
device to indicate that receiving
of the RRC release message is
successfully acknowledged

60 ms

Start time point of
the first duration
(a wake-up module
is just turned on)

End time point of the
first duration
(the wake-up module
is completely turned
on or is stable)

First duration

Enter an idle state
or an inactive state

FIG. 7D

Time point at which a
terminal device
receives an RRC
release message from
a network device

The terminal device
monitors or receives a wake-
up signal from the network
device by using the wake-up
module after entering the
idle state or the inactive state

Time point of
acknowledgement ACK
information used by a lower
layer of the terminal device to
indicate that receiving of the
RRC release message is
successfully acknowledged

60 ms

Start time point of
the first duration
(a wake-up module
is just turned on)

End time point of the
first duration
(the wake-up module
is completely turned
on or is stable)

Enter an idle state
or an inactive state

First duration

FIG. 7E

Time point at which a
terminal device
receives an RRC
release message from
a network device

Time point of acknowledgement
ACK information used by a
lower layer of the terminal
device to indicate that receiving
of the RRC release message is
successfully acknowledged

The terminal device monitors
or receives a wake-up signal
from the network device by
using the wake-up module
after entering the idle state or
the inactive state

60 ms

Start time point of
the first duration
(a wake-up module
is just turned on)

End time point of the
first duration
(the wake-up module
is completely turned
on or is stable)

First duration

Enter an idle state
or an inactive state

FIG. 7F

EP 4 564 864 A1

Communication apparatus 800

| Transceiver unit 801 | Processing unit 802 | Storage unit 803 |

FIG. 8

Communication apparatus 900

901

Communication interface

902

Processor

904

903

Memory

FIG. 9

Chip 1000

Processor 1002

Interface circuit 1001

Memory 1003

FIG. 10

## INTERNATIONAL SEARCH REPORT

| | International application No. |
|---|---|
| | **PCT/CN2023/103463** |

| A. | CLASSIFICATION OF SUBJECT MATTER |
|---|---|

H04W 24/02(2009.01)i

According to International Patent Classification (IPC) or to both national classification and IPC

| B. | FIELDS SEARCHED |
|---|---|

Minimum documentation searched (classification system followed by classification symbols)

IPC:H04W,H04L

Documentation searched other than minimum documentation to the extent that such documents are included in the fields searched

Electronic data base consulted during the international search (name of data base and, where practicable, search terms used)

CNTXT, CNKI, DWPI, ENTXT, 3GPP: 非激活, 唤醒, 激活, 监听, 空闲, 时长, 时间, 释放, 睡眠, 闲置, 消息, 寻呼, 侦听, 指示, RRC, inactivat+, wake, activat+, listen, idle, duration, time, release, sleep, message, paging, indication

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | WO 2022056806 A1 (GUANGDONG OPPO MOBILE COMMUNICATIONS CO., LTD.) 24 March 2022 (2022-03-24) description, page 6 line 21-page 11 line 12, and figures 1-3 | 1-25 |
| Y | CN 103686953 A (BEIJING XINWEI TELECOM TECHNOLOGY INC.) 26 March 2014 (2014-03-26) description, paragraphs [0003]-[0042], and figures 1-2 | 1-25 |
| A | CN 108781430 A (HUAWEI TECHNOLOGIES CO., LTD.) 09 November 2018 (2018-11-09) entire document | 1-25 |
| A | CN 114339995 A (SPREADTRUM COMMUNICATIONS (SHANGHAI) CO., LTD.) 12 April 2022 (2022-04-12) entire document | 1-25 |
| A | US 2021045060 A1 (TELEFONAKTIEBOLAGET LM ERICSSON (PUBL)) 11 February 2021 (2021-02-11) entire document | 1-25 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **03 August 2023** | **28 August 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/103463** |

| C. | DOCUMENTS CONSIDERED TO BE RELEVANT | |
|---|---|---|
| Category* | Citation of document, with indication, where appropriate, of the relevant passages | Relevant to claim No. |
| A | QUALCOMM INC. "Page monitoring in RRC_INACTIVE state with short eDRX" *3GPP TSG-RAN WG2 Meeting #109e, R2-2000538,* No. tsgr2_109_e, 06 March 2020 (2020-03-06), entire document | 1-25 |

Form PCT/ISA/210 (second sheet) (July 2022)

**INTERNATIONAL SEARCH REPORT**
Information on patent family members

International application No.

**PCT/CN2023/103463**

| Patent document cited in search report | | | Publication date (day/month/year) | Patent family member(s) | | | Publication date (day/month/year) |
|---|---|---|---|---|---|---|---|
| WO | 2022056806 | A1 | 24 March 2022 | None | | | |
| CN | 103686953 | A | 26 March 2014 | None | | | |
| CN | 108781430 | A | 09 November 2018 | WO | 2017166313 | A1 | 05 October 2017 |
| CN | 114339995 | A | 12 April 2022 | None | | | |
| US | 2021045060 | A1 | 11 February 2021 | WO | 2019032016 | A1 | 14 February 2019 |
| | | | | EP | 3665986 | A1 | 17 June 2020 |

Form PCT/ISA/210 (patent family annex) (July 2022)

46

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211042819